(19) Europäisches Patentamt
European Patent Office
Office européen des brevets

(11) EP 4 257 619 A1

# (12) EUROPÄISCHE PATENTANMELDUNG

(43) Veröffentlichungstag:
**11.10.2023 Patentblatt 2023/41**

(21) Anmeldenummer: **22166509.4**

(22) Anmeldetag: **04.04.2022**

(51) Internationale Patentklassifikation (IPC):
***C08F 283/02*** *(2006.01)* ***C08F 290/06*** *(2006.01)*
***C08L 51/08*** *(2006.01)*

(52) Gemeinsame Patentklassifikation (CPC):
(C-Sets verfügbar)
**C08L 51/08; C08F 283/02; C08F 290/061** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Seidel, Andreas**
  **41542 Dormagen (DE)**
- **Gieler, Mandy**
  **53507 Dernau (DE)**
- **Reithmeier, Marina**
  **51069 Köln (DE)**
- **Gamez, Jose**
  **51063 Köln (DE)**
- **Meyer, Jan**
  **42329 Wuppertal (DE)**
- **Zhou, Tianhang**
  **64293 Darmstadt (DE)**
- **Müller-Plathe, Florian**
  **60435 Frankfurt am Main (DE)**

(74) Vertreter: **Levpat**
**c/o Covestro AG**
**Gebäude K12**
**51365 Leverkusen (DE)**

## (54) PFROPFCOPOLYMERE ZUR REDUKTION DER GRENZFLÄCHENSPANNUNG IN POLYMERBLENDS

(57) Die vorliegende Erfindung betrifft ein Pfropfcopolymer der allgemeinen Struktur B-$(A)_{ns}$ bestehend aus Blöcken zweier in ihrer chemischen Zusammensetzung unterschiedlicher Polymere A und B, wobei eines der Polymere ein Polykondensationspolymer ist ausgewählt aus der Gruppe bestehend aus Polycarbonaten, Polyestercarbonaten, Polyestern und Polyamiden und das andere Polymer ein Polymerisat aus mindestens einem Vinylmonomeren ist, dadurch gekennzeichnet, dass
(i) das zahlengemittelte Molekulargewicht des Blocks aus dem Polymer B $M_n$(B) mindestens 13 kg/mol, bestimmt durch eine Kombination aus Gelpermeationschromatographie und NMR-Spektroskopie, beträgt,
(ii) die Anzahl der Seitenketten im Pfropfcopolymer $n_s$ mindestens 3, bestimmt durch NMR-Spektroskopie, beträgt,
(iii) das zahlengemittelte Molekulargewicht des Blocks aus dem Polymer A $M_n$(A) mindestens 1,5 kg/mol, bestimmt durch eine Kombination aus Gelpermeationschromatographie und NMR-Spektroskopie, beträgt und
(iv) $n_s$ multipliziert mit $M_n$ (A) mindestens 13 kg/mol ergibt,
sowie die Verwendung dieser Pfropfcopolymere zur Herabsetzung der Phasengrenzflächenspannung in Mischungen enthaltend die Polymere A und B, Zusammensetzungen enthaltend die Pfropfcopolymere sowie die Polymere A und B sowie Formkörper enthaltend diese Zusammensetzungen.

EP 4 257 619 A1

(52) Gemeinsame Patentklassifikation (CPC): (Forts.)

C-Sets
**C08F 283/02, C08F 210/06;**
**C08F 283/02, C08F 212/08;**
**C08F 290/061, C08F 210/06;**
**C08F 290/061, C08F 212/08;**
**C08L 51/08, C08L 25/06, C08L 69/005**

## Beschreibung

Die vorliegende Erfindung betrifft Pfropfcopolymere spezieller Architektur bestehend aus Blöcken zweier in ihrer chemischen Zusammensetzung unterschiedlichen Polymeren A und B, wobei eines der Polymere ein Polykondensationspolymer ist ausgewählt aus der Gruppe bestehend aus Polycarbonaten, Polyestercarbonaten, Polyestern, Polyamiden, und das andere Polymer ein Polymerisat aus einem oder mehreren unterschiedlichen Vinylmonomeren ist. Weiterhin betrifft die Erfindung die Verwendung dieser Pfropfcopolymere zur Herabsetzung der Phasengrenzflächenspannung in Mischungen enthaltend die Homopolymere A und B oder in Mischungen von Polymeren mit vergleichbarer Polarität, Zusammensetzungen enthaltend die Pfropfcopolymere sowie die Homopolymere A und B oder Polymere vergleichbarer Polarität, aus derartigen Zusammensetzungen hergestellte Formmassen sowie Formkörper hergestellt aus diesen Formmassen.

Mischungen von in ihrer chemischen Zusammensetzung unterschiedlichen, nicht mischbaren Polymeren eignen sich zur Herstellung von mehrphasigen Polymerblends mit Eigenschaften, die die spezifischen anwendungstechnischen Vorteile der beiden Polymere bisweilen in synergistischer Art und Weise kombinieren. Sind die Polaritätsunterschiede der Polymere A und B aber zu groß, das heißt die Grenzflächenspannung an der Phasengrenzfläche der beiden Polymere zu groß, dann neigen die Polymerblends zur Phasenentmischung. Eine daraus resultierende grobteilige und/oder instabile Phasenmorphologie bzw. mangelhafte Phasenadhäsion führt dann oft zu unerwünschten Effekten wie beispielsweise mangelhafte Lichttransmission, Phasendelamination, mangelhafte Verarbeitungsstabilität, unzureichende mechanische Eigenschaften (beispielsweise Materialduktilität/-zähigkeit, Reißdehnung, Spannungsrissbeständigkeit oder Bindenahtfestigkeit), kosmetische Oberflächendefekte auf aus dem Polymerblend über einen thermoplastischen Verarbeitungsprozess geformten, insbesondere bei hoher Scherung spritzgegossenen Bauteilen oder Enthaftung von auf spritzgegossenen Bauteilen aufgebrachten dekorativen Schichten. In solchen Fällen ist es zur Erzielung angestrebter technischer Eigenschaftsprofile oft erforderlich, den Polymerblend-Zusammensetzungen einen Verträglichkeitsvermittler zuzusetzen, der die Grenzflächenspannung zwischen den das Blend aufbauenden Polymeren herabsetzt und damit die zuvor genannten technischen Probleme reduziert oder im besten Fall vollständig eliminiert.

Weiterhin eignen sich Mischungen von in ihrer chemischen Zusammensetzung unterschiedlichen Polymeren zur Herstellung von Blockcopolymeren bestehend aus Blöcken der chemisch unterschiedlichen Polymerspezies durch Reaktion der beiden Polymere miteinander in der mehrphasigen Schmelze der Polymermischung. Da eine derartige Reaktion naturgemäß nur an der Phasengrenzfläche der unterschiedlichen Polymere in der Schmelze erfolgen kann, ist die Reaktionsgeschwindigkeit solcher Schmelzereaktionen abhängig von der Größe der Phasengrenzfläche, das heißt von der Phasendispergierung bzw. der Domänengröße der unterschiedlichen Polymere in der Schmelzemischung. Thermodynamisch stabile, feinteilige Phasenmorphologien in der Schmelze, welche zur Erzielung hoher Umsatzgrade innerhalb technisch möglicher bzw. sinnvoller Reaktionsverweilzeiten demnach erforderlich sind, erfordern oft eine Reduktion der Grenzflächenspannung der unterschiedlichen Polymere in der Schmelzemischung, das heißt den Einsatz von Verträglichkeitsvermittlern als Prozesshilfsmittel.

Als Verträglichkeitsvermittler in einer Polymermischung aus zwei chemisch unterschiedlichen Polymeren A und B eignen sich erfahrungsgemäß Blockcopolymere bestehend aus Blöcken der Polymeren A und B, wobei gemäß gängiger Vorstellung, welche sich aus Erfahrungen mit der Emulgierung unmischbarer niederviskoser Flüssigkeiten ableiten, im allgemeinen bipolare A-B-Blockcopolymer-Architekturen dem Fachmann als besonders attraktiv im Hinblick auf die Erzielung einer hohen Wirksamkeit für den intendierten Zweck erscheinen. Derartige Blockcopolymer-Strukturen sind aber bei Blockcopolymeren, welche als Block A ein Polykondensationspolymer und als Block B ein Vinyl(co)polymerisat enthalten, schwierig synthetisch darzustellen. Grundsätzlich einfacher synthetisch zugänglich sind Pfropfcopolymere bestehend aus Blöcken eines Polykondensationspolymers und eines Vinyl(co)polymerisats.

US 4,959,411 offenbart beispielsweise ein Verfahren zur Herstellung eines Copolymers durch Reaktion in organischer Lösung oder in einer Schmelzecompoundierung eines Glycidylmethacrylat-gepfropften Olefin-Polymers mit einem Carboxy-funktionalisierten Polycarbonat sowie die Verwendung eines solchen Copolymers, bei dem es sich offenbar um ein Pfropfcopolymer handelt, zur Kompatibilisierung von Polymerblends aus Polycarbonat und Polyolefin mit dem Ziel der Reduktion ihrer Neigung zur Delamination. Über einen Effekt der räumlichen Anordnung der Pfropfäste auf dem Pfropfrückgrat bzw. der Anzahl der Pfropfäste sowie der Länge der Pfropfäste und des Pfropfrückgrats auf die Effektivität der Pfropfcopolymere als Verträglichkeitsvermittler in Polymerblends schweigt diese Anmeldung gänzlich.

Die Pfropfcopolymere gemäß dem Stand der Technik weisen eine unzureichende Wirkung im Hinblick auf die Reduktion der Phasengrenzflächenspannung in Blends oder Schmelzemischungen der Polymere A und B, aus denen sie aufgebaut sind, auf.

US 2006063891 A1 offenbart Pfropfcopolymere mit einer B-$(A)_n$-Architektur, welche aus radikalischen Polymerisaten als Blöcke A und B aufgebaut sind und aus bevorzugt n=2-8 Pfropfästen des Polymers A mit einem mittleren Molekulargewicht $M_n(A)$ von bevorzugt 20000 bis 100000 g/mol aufgepfropft auf dem Rückgrat des Polymers B mit einem mittleren Molekulargewicht $M_n(B)$ von bevorzugt >50000 g/mol bestehen und wobei die relativen Blocklängen so gewählt sind, das $n \cdot M_n(A)/(n \cdot M_n(A)+M_n(B))$ bevorzugt im Bereich 0,6 bis 0,8 liegt. Die Anmeldung offenbart, dass sich

diese Pfropfcopolymere zur Schlagzähmodifizierung transparenter Polymere eignen. Über ihre Wirkung als Verträglichkeitsvermittler in Blends der Homopolymere A und B schweigt diese Anmeldung.

Der vorliegenden Erfindung lag der Wunsch zu Grunde, spezielle Pfropfcopolymere bereitzustellen, welche als Additiv oder Prozesshilfsmittel unter vergleichbaren Bedingungen, das heißt unter Verwendung selber Stoffmengenkonzentration, eingesetzt eine verbesserte Wirkung aufweisen im Hinblick auf die Reduktion der Grenzflächenspannung in Polymerblends und/oder reaktiven Schmelzemischungen aus in ihrer chemischen Zusammensetzung unterschiedlichen Polymeren A und B, wobei eines der Polymere ein Polykondensationspolymer ist ausgewählt aus der Gruppe bestehend aus Polycarbonaten, Polyestercarbonaten, Polyestern, Polyamiden und Mischungen daraus und das andere Polymer ein Polymerisat aus einem oder mehreren unterschiedlichen Vinylmonomeren ist. Dabei sind die Vinylmonomere bevorzugt ausgewählt aus der Gruppe bestehend aus Styrol, Styrolderivaten, Vinylcyaniden, Acrylsäureestern, Acrylsäureesterderivaten, Olefinen, Maleinsäureimid und Maleinsäureimidderivaten. Ziel ist es letztendlich, dass diese Pfropfcopolymere damit zu einer verbesserten Lösung mindestens eines der zuvor genannten technischen Probleme, die in mangelhafter Verträglichkeit der Polymere A und B begründet sind, beitragen können.

Als Maß für die Reduktion der Grenzflächenspannung wird im Rahmen dieser Erfindung die Größe E = $(1 - \gamma/\gamma_0)$ verwendet und als Phasenverträglichkeitsvermittler-Effizienz bezeichnet. $\gamma_0$ ist dabei die Grenzflächenspannung des unkompatibilisierten Polymermerblends aus den Homopolymeren A und B, das heißt die Grenzflächenspannung an der Phasengrenzfläche solcher Polymere in Abwesenheit der Pfropfcopolymere, und $\gamma$ der durch Zugabe der Pfropfcopolymere reduzierte Wert der Grenzflächenspannung. Zeigt das Pfropfcopolymer keinerlei Wirkung als Verträglichkeitsvermittler, so ist $\gamma = \gamma_0$ und somit E = 0. Im anderen Extremfall bestmöglicher Phasenverträglichkeitsvermittlung wird die Grenzflächenspannung an der Phasengrenzfläche der Homopolymere A und B in Anwesenheit der Pfropfcopolymere auf den Wert $\gamma = 0$ abgesenkt, das heißt vollständige Mischbarkeit realisiert. In diesem Fall resultiert somit E = 1. Der Wert der Phasenverträglichkeitsvermittler-Effizienz E hängt naturgemäß von der Einsatzkonzentration des Pfropfcopolymers ab. Im Rahmen dieser Erfindung wurde unter den Bedingungen, die in den zu Grunde liegenden Experimenten angewendet wurden, ein Mindestwert von 30, bevorzugt ein Mindestwert von 35, weiter bevorzugt von 40, besonders bevorzugt von 45 als wünschenswert angesehen. Weiterhin bestand der Wunsch, dass diese Pfropfcopolymere ihre effektive Wirkung entfalten bei einem möglichst geringen Molekulargewicht des eingesetzten Pfropfcopolymers, da Pfropfcopolymere mit zu hohem Molekulargewicht geringere Diffusionskoeffizienten in Polymerschmelzen aufweisen und deshalb aus kinetischen Gründen schwieriger (das heißt langsamer) in Polymerblends an die Grenzfläche der Polymerkomponenten gebracht werden können, um dort effektiv ihre gewünschte Wirkung entfalten zu können.

Die Aufgabe wird gelöst durch Pfropfcopolymere der allgemeinen Struktur $B\text{-}(A)_{ns}$ bestehend aus Blöcken zweier in ihrer chemischen Zusammensetzung unterschiedlicher Polymere A und B, wobei eines der Polymere, bevorzugt das Polymer A, ein Polykondensationspolymer ist ausgewählt aus der Gruppe bestehend aus Polycarbonaten, Polyestercarbonaten, Polyestern und Polyamiden und das andere Polymer, bevorzugt das Polymer B, ein Polymerisat aus mindestens einem Vinylmonomeren ist, dadurch gekennzeichnet, dass

(i) das zahlengemittelte Molekulargewicht des Blocks aus dem Polymer B $M_n(B)$ mindestens 13 kg/mol, bestimmt durch eine Kombination aus Gelpermeationschromatographie und NMR-Spektroskopie, beträgt,
(ii) die Anzahl der Seitenketten im Pfropfcopolymer $n_{s,}$ bestimmt durch NMR-Spektroskopie, mindestens 3 beträgt,
(iii) das zahlengemittelte Molekulargewicht der Blöcke aus dem Polymer A $M_n(A)$ mindestens 1,5 kg/mol, bestimmt durch eine Kombination aus Gelpermeationschromatographie und NMR-Spektroskopie, beträgt und
(iv) $n_s$ multipliziert mit $M_n(A)$ mindestens 13 kg/mol ergibt.

Im Falle eines Gemisches aus Pfropfcopolymermolekülen mit unterschiedlichen individuellen $n_s$-Werten, bezieht sich das Merkmal "$n_s$" gemäß der in dieser Erfindung genannten Vorzugsbereiche, Ausführungsformen und Ansprüche generell auf den zahlengemittelten arithmetischen Mittelwert der $n_s$-Werte der individuellen Polymermoleküle.

Der Wert von $n_s$ ist bevorzugt bei mindestens 4, besonders bevorzugt bei mindestens 5 und am meisten bevorzugt bei mindestens 6.

$M_n(A)$ ist bevorzugt bei mindestens 3,0 kg/mol, besonders bevorzugt bei mindestens 4,5 kg/mol und am meisten bevorzugt bei mindesten 5,3 kg/mol.

$M_n(B)$ ist bevorzugt bei mindestens 20 kg/mol, besonders bevorzugt bei mindestens 23 kg/mol und am meisten bevorzugt bei mindestens 30 kg/mol.

Der Wert von $n_s \times M_n(A)$ ist bevorzugt bei mindestens 20 kg/mol, besonders bevorzugt bei mindestens 30 kg/mol und am meisten bevorzugt bei mindestens 35 kg/mol.

Der Wert von $n_s$ liegt bevorzugt bei maximal 15, weiter bevorzugt bei maximal 10, besonders bevorzugt bei maximal 8.

Der Wert von $M_n(B)$ liegt bevorzugt bei maximal 200 kg/mol, weiter bevorzugt bei maximal 100 kg/mol, besonders bevorzugt bei maximal 50 kg/mol.

Der Wert von $M_n(A)$ liegt bevorzugt bei maximal 15 kg/mol, bevorzugt bei maximal 9 kg/mol, besonders bevorzugt bei maximal 8 kg/mol.

Der Wert von $n_s$ multipliziert mit $M_n(A)$ liegt bevorzugt bei maximal 120 kg/mol, weiter bevorzugt bei 80 kg/mol, besonders bevorzugt bei 50 kg/mol.

Es gilt bevorzugt, dass $M_n(A) \times n_s / [M_n(B) + M_n(A) \times n_s]$ im Bereich von 0,25 bis 0,75, weiter bevorzugt im Bereich von 0,40 bis 0,70 und besonders bevorzugt im Bereich von 0,40 bis 0,60 liegt.

Die Ober- und Untergrenzen von $n_s$, $M_n(A)$, $M_n(B)$ und $n_s \times M_n(A)$ sowie die Bereiche von $M_n(A) \times n_s / [M_n(B) + M_n(A) \times n_s]$ können beliebig miteinander kombiniert werden.

Bevorzugt sind insbesondere Pfropfcopolymere gekennzeichnet durch die Kombination folgender Merkmale:

(i) $M_n(B)$ mindestens 23 kg/mol,
(ii) $n_s$ mindestens 5,
(iii) $M_n(A)$ mindestens 3,0 kg/mol und
(iv) $n_s$ multipliziert mit $M_n(A)$ mindestens 13 kg/mol.

Besonders bevorzugt sind solche Pfropfcopolymere gekennzeichnet durch die Kombination folgender Merkmale:

(i) $M_n(B)$ mindestens 23 kg/mol,
(ii) $n_s$ mindestens 6,
(iii) $M_n(A)$ mindestens 4,5 kg/mol und
(iv) $n_s$ multipliziert mit $M_n(A)$ mindestens 13 kg/mol.

Am stärksten bevorzugt sind solche Pfropfcopolymere gekennzeichnet durch die Kombination folgender Merkmale:

(i) $M_n(B)$ mindestens 23 kg/mol,
(ii) $n_s$ mindestens 6,
(iii) $M_n(A)$ mindestens 4,5 kg/mol,
(iv) $n_s$ multipliziert mit $M_n(A)$ mindestens 13 kg/mol und
(v) $M_n(A) \times n_s / [M_n(B) + M_n(A) \times n_s]$ im Bereich von 0,40 bis 0,70.

Die erfindungsgemäßen Pfropfcopolymere können sich weiterhin hinsichtlich ihrer Architektur, d.h. der räumlichen Verteilung der Pfropfäste auf dem Pfropfcopolymerrückgrat unterscheiden. Dabei können die Pfropfäste statistisch auf dem Pfropfcopolymerrückgrat verteilt aufgepfropft sein ("statistisch gepfropft"). Ebenso ist es möglich, dass (i) die Pfropfäste gleichmäßig und äquidistant auf dem Pfropfcopolymerrückgrat angeordnet sind ("gleichmäßig äquidistant gepfropft"). Weiterhin können (ii) die Pfropfäste vollständig an einem Ende des Pfropfcopolymerrückgrates angeordnet sein ("einfach endständig gepfropft"), (iii) die Pfropfäste jeweils an den beiden Enden des Pfropfcopolymerrückgrates angeordnet sein ("doppelt endständig gepfropft") oder (iv) die Pfropfäste in der Mitte des Pfropfcopolymerrückgrates des Pfropfcopolymers angeordnet sein ("mittelständig gepfropft"). Die Architekturen (i) bis (iv) sind in Abbildung 1 schematisch dargestellt.

Bevorzugt ist das erfindungsgemäße Pfropfcopolymer mittelständig gepfropft oder doppelt endständig gepfropft, weiter bevorzugt ist es mittelständig gepfropft.

Die Architekturen (ii), (iii) und (iv) weisen ein Pfropfcopolymerrückgrat auf, das Abschnitte mit Pfropfästen und Abschnitte ohne Pfropfäste enthält. Bevorzugt sind dabei solche Pfropfcopolymere, bei denen die Abschnitte des Pfropfcopolymerrückgrats mit Pfropfästen in Summe einen Massenanteil von maximal 50 Gew.-%, weiter bevorzugt maximal 40 Gew.-%, besonders bevorzugt maximal 30 Gew.-% des Pfropfcopolymerrückgrats ausmachen.

Das Polymerisat aus den Vinylmonomeren wird im Rahmen der vorliegenden Erfindung auch als Vinyl(co)polymerisat bezeichnet.

Der Block B wird im Rahmen der vorliegenden Erfindung auch als Pfropfcopolymerrückgrat, Pfropfcopolymerrückgrat oder Rückgrat bezeichnet. Die Blöcke A werden als Seitenketten oder Pfropfäste bezeichnet.

Bevorzugt ist das mindestens eine Vinylmonomere ausgewählt aus der Gruppe bestehend aus Styrol, Styrolderivaten, Vinylcyanide, Acrylsäureestern, Acrylsäureesterderivaten, Olefinen, Maleinsäureimid und Maleinsäureimidderivaten.

Bevorzugt weisen die Blöcke der Polymeren A und B ähnliche Polaritäten und weiter bevorzugt ähnliche chemische Strukturen auf wie die Polymere, die das Polymerblend oder die Polymerschmelzemischung aufbauen, für die eine Reduktion der Grenzflächenspannung angestrebt wird. Das heißt, bevorzugt weist die Polymerkombination der Blöcke A und B einen ähnlichen Flory-Huggins-Parameter auf wie die Kombination der Polymere, die das Polymerblend oder die Polymerschmelzemischung aufbauen, für die eine Reduktion der Grenzflächenspannung angestrebt wird.

Weiter bevorzugt ist es, dass die Blöcke aus denselben Polymeren A und B bestehen, die auch in dem Polymerblend oder der Polymerschmelzemischung enthalten sind, wofür eine Reduktion der Grenzflächenspannung angestrebt wird. Dabei bezieht sich der Ausdruck "aus denselben Polymeren A und B" auf die chemische Struktur, nicht aber notwendigerweise auf das Molekulargewicht.

**Polykondensationspolymer**

Eines des Polymere, aus dem das erfindungsgemäße Pfropfcopolymerisat aufgebaut ist, bevorzugt das Polymer A, ist ein Polykondensationspolymer ausgewählt aus der Gruppe bestehend aus Polycarbonaten, Polyestercarbonaten, Polyestern und Polyamiden. Es können auch Mischungen verschiedener Polykondensationspolymere mit ähnlicher Polarität und chemischer Struktur zum Einsatz kommen, beispielsweise Mischungen strukturell verschiedener aromatischer Polycarbonate, aromatischer Polyestercarbonate oder aromatischer Polyester, bevorzugt Mischungen strukturell verschiedener aromatischer Polycarbonate oder Mischungen strukturell verschiedener aromatischer Polyestercarbonate oder Mischungen strukturell verschiedener aromatischer Polyester, besonders bevorzugt Mischungen strukturell verschiedener aromatischer Polycarbonate.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (1)

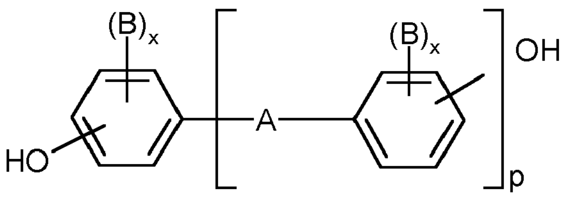

(1),

wobei

A eine Einfachbindung, $C_1$ bis $C_5$-Alkylen, $C_2$ bis $C_5$-Alkyliden, $C_5$ bis $C_6$-Cycloalkyliden, -O-, -SO- , -CO-, -S-, $-SO_2-$, $C_6$ bis $C_{12}$-Arylen, an das weitere aromatische gegebenenfalls Heteroatome enthaltende Ringe kondensiert sein können,

oder ein Rest der Formel (2) oder (3)

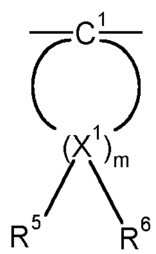

(2)

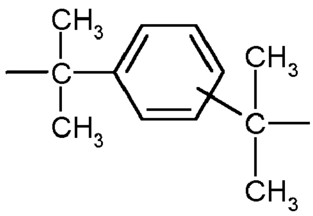

(3)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.
Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha,$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1 -Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein durch den Einbau von dreifunktionellen oder mehr als dreifunktionellen Verbindungen, beispielsweise solchen mit drei und mehr phenolischen Gruppen. Bevorzugt werden aber lineare Polycarbonate, weiter bevorzugt auf Basis von Bisphenol-A, eingesetzt.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate aber bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden. Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 99,9 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In Frage kommende Polyester sind in bevorzugter Ausführungsform aromatisch, weiter bevorzugt handelt es sich um Polyalkylenterephthalate.

Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

In einer Ausführungsform der vorliegenden Erfindung werden als Polykondensationspolymer amorphe und/oder semi-kristalline Polyamide verwendet. Geeignete Polyamide sind aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide.

Bevorzugt wird als Polykondensationspolymer lineares Polycarbonat auf Basis von ausschließlich Bisphenol A eingesetzt.

**Vinyl(co)polymerisat**

Bei den erfindungsgemäßen Vinyl(co)polymerisat handelt es sich im ein Polymer aus einem oder mehreren Vinylmonomeren, bevorzugt ausgewählt aus Styrol, Styrolderivaten, Acrylnitril, Acrylsäureestern, Acrylsäureesterderivaten, Olefinen, Maleinsäureimid und Maleinsäureimidderivaten.

Im Rahmen der vorliegenden Erfindung werden unter Vinyl(co)polymerisaten auch solche Polymere aus einem oder mehreren Vinylmonomeren verstanden, die zusätzlich pfropfaktive Einheiten als Comonomer oder Endgruppe in die Polymerkette eingebaut und/oder auf die Polymerkette aufgepfropft enthalten. Die Menge an diesen pfropfaktiven Einheiten bestimmt dabei das erfindungsgemäße Merkmal $n_s$.

Geeignete Styrolderivate sind beispielsweise $\alpha$-Methylstyrol und kernsubstituierte Vinylaromaten wie beispielsweise p-Methylstyrol und p-Chlorstyrol.

Bei den Acrylsäureestern und Acrylsäureesterderivaten handelt es sich beispielsweise um (Meth)Acrylsäure-($C_1$-$C_8$)-Alkylester wie Methylmethacrylat, n-Butylacrylat und tert.-Butylacrylat und Glycidylmethacrylat.

Als Vinylcyanide seien beispielhaft Acrylnitril und Methacrylnitril genannt.

Je nachdem, welches der unten genannten Herstellverfahren für die erfindungsgemäßen Pfropfcopolymere angewendet wird, kann es erforderlich sein, zumindest teilweise ein Vinylmonomer mit reaktiven Gruppen für die Kopplungsreaktion wie beispielsweise Hydroxyl-, Carboxyl-, Amino-, Doppelbindungen enthaltende Gruppen wie beispielsweise Vinyl, Allyl oder Acryloyl, Carbonyl-, Nitril-, Ester- oder Epoxy-Gruppen einzusetzen. Bevorzugt werden dabei Epoxygruppen und besonders bevorzugt wird Glycidylmethacrylat als mindestens eines der Vinylmonomeren eingesetzt. Das Glycidylmethacrylat kann dabei sowohl in die Hauptkette des Vinyl(co)polymerisats einpolymerisiert oder als Seitengruppe auf die Hauptkette des Vinyl(co)polymerisats aufgepfropft sein. Bevorzugt ist das Glycidylmethacrylat in die Hauptkette des Vinyl(co)polymerisats einpolymerisiert.

Weitere geeignete Vinyl(co)polymere sind (Co)Polymerisate aus

B.1 50 bis 99 Gew.-%, bevorzugt 65 bis 85 Gew.-%, besonders bevorzugt 70 bis 80 Gew.-% bezogen auf das (Co)Polymerisat B mindestens eines Monomeren ausgewählt aus der Gruppe der Vinylaromaten, kernsubstituierten Vinylaromaten und (Meth)Acrylsäure-(C1-C8)-Alkylester und

B.2 1 bis 50 Gew.-%, bevorzugt 15 bis 35 Gew.-%, besonders bevorzugt 20 bis 30 Gew.-% bezogen auf das (Co)Polymerisat B mindestens eines Monomeren ausgewählt aus der Gruppe der Vinylcyanide und (Meth)Acrylsäure-(C1-C8)-Alkylester.

Die Vinyl(Co)Polymerisate sind bekannt und lassen sich beispielsweise durch radikalische Polymerisation, insbesondere durch Emulsions-, Suspensions-, Lösungs- oder Massepolymerisation herstellen.

Polyolefine werden ebenfalls durch Kettenpolymerisation, beispielsweise durch radikalische oder anionische Polymerisation, hergestellt. Als Monomere dabei werden Alkene eingesetzt. Eine alternative Bezeichung für Alkene ist Olefine. Die Monomere können einzeln oder als Mischung verschiedener Monomere polymerisiert werden.

Bevorzugte Monomere sind Ethylen, Propylen, 1-Buten, Isobuten 1-Penten, 1-Hepten, 1-Okten und 4-Methyl-1-Penten.

Die Polyolefine können bis zu 50 Gew.-%, weiter bevorzugt bis zu 30 Gew.-% weitere vinylische Comonomere enthalten, beispielsweise und bevorzugt Methylacrylat, Ethylacrylat, Butylacrylat, Glycidylmethacrylat und Methylmethacrylat.

Die Polyolefine können amorph oder teilkristallin sein. Sie können linear oder verzweigt sein. Die Herstellung von Polyolefinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

**Herstellung der erfindungsgemäßen Pfropfcopolymere**

Bei der Pfropfcopolymerisation handelt es sich um eine Technik zur Darstellung von Polymeren, deren Hauptkette Ausgangspunkt für weitere Ketten eines anderen Monomertyps bildet. So entsteht ein Copolymer B-$(A)_{ns}$, an

dessen Hauptkette B sich kammartig mehrere Ketten A aufgebaut aus einem weiteren Monomertyps anschließen und $n_s$ die Anzahl dieser Ketten angibt. Die Hauptkette A wird im Rahmen dieser Erfindung auch als Rückgrat und die Ketten B als Seitenketten oder Pfropfäste bezeichnet.

Im Hinblick auf die vorliegende Erfindung ist es unerheblich, nach welchem Verfahren die erfindungsgemäßen Pfropfcopolymerstrukturen hergestellt werden, das heißt grundsätzlich eignen sich alle dem Fachmann bekannten Pfropfcopolymerisationsverfahren zur Herstellung solcher erfindungsgemäßen Pfropfcopolymere, sofern mit ihnen die beanspruchten Produktmerkmale realisiert werden.

Dem Fachmann sind beispielsweise insbesondere folgende drei grundsätzlich zur Herstellung der erfindungsgemäßen Pfropfcopolymere geeigneten Pfropfcopolymerisationsverfahren bekannt:

"Grafting to"-Verfahren:

Ein Polymer wird einer hochenergetischen elektromagnetischen Strahlung (z.B. Gammastrahlung) ausgesetzt, welche entlang des Rückgrates freie Radikale erzeugt, die dann den Ausgangspunkt für eine weitere radikalische Polymerisation unter Ausbau des zweiten Polymers bilden. Alternativ können auch Radikalbildner anstelle der hochenergetischen elektromagnetischen Strahlung zur Erzeugung der freien Radikale entlang des Rückgrates des ersten Polymers eingesetzt werden. Derartige Radikalbildner zersetzen sich bei der erhöhten Temperatur der Pfropfungsreaktion oder alternativ unter dem Einfluss von höherenergetischer elektromagnetischer Strahlung (z.B. UV-Strahlung) unter Ausbildung von Radikalen, die ihrerseits durch Abstraktion von beispielsweise Wasserstoffatomen aus dem Rückgrat des ersten Polymers entlang dessen Hauptkette oder an Seitengruppen des Polymers freie Radikale erzeugen können, die dann den Ausgangspunkt für eine weitere radikalische Polymerisation unter Ausbau des zweiten Polymers bilden. Bevorzugte Radikalbilder sind Azoverbindungen wie beispielsweise Azoisobutyronitril (AIBN) und organische oder anorganische Peroxide wie beispielsweise Dibenzoylperoxid (DBPO) oder Alkaliperoxodisulfate. Derartige Pfropfpolymerisationsverfahren können grundsätzlich sowohl in einer Lösung, Emulsion oder Suspension des ersten Polymers, in der Schmelze des ersten Polymers als auch im Feststoff des ersten Polymers erfolgen. Im letztgenannten Fall werden die Monomere, aus denen das zweite, die Pfropfäaste ausbildende Polymer aufgebaut wird, in den Feststoff des ersten Polymers eingequollen und dann zur Polymerisation gebracht.

In einem alternativen Verfahren werden ein bereits bestehendes Polymer und das zu addierende Monomer in einem unpolaren Lösungsmittel (z. B. Dichlormethan) gelöst und mit einer Lewis-Säure (Coinitiator) versetzt. Die Lewis-Säure entzieht nun dem Polymer an mehreren Stellen Elektronen. Die dabei entstehenden positiv geladenen Stellen stellen dann den Ausgangspunkt für eine kationische Polymerisation mit dem Monomer, welches die Pfropfäste ausbildet, dar.

"Grafting-from"-Verfahren:

Bei diesem Verfahren werden am Rückgrat des ersten Polymers entlang dessen Hauptkette oder an seinen etwaigen Seitengruppen reaktive funktionelle Gruppen, beispielsweise Hydroxyl-, Carboxyl-, Amino-, Doppelbindungen enthaltende Gruppen wie beispielsweise Vinyl, Allyl oder Acryloyl, Carbonyl-, Nitril-, Ester- oder Epoxy-Gruppen eingebaut. Das kann durch Copolymerisation mit Monomeren, die solche funktionellen Gruppen enthalten, oder durch nachträgliche chemische Behandlung des Rückgratpolymers erfolgen. An diesen reaktiven funktionellen Gruppen im Rückgratpolymer kann dann eine Pfropfcopolymerisation unter Aufbau der Pfropfäste aus monomeren Baueinheiten angreifen. Je nach funktioneller Gruppe eigenen sich zum Aufbau der Pfropfäste hierbei unterschiedliche Polymerisationsverfahren wie beispielsweise Polykondensation, Polyaddition oder radikalische, anionische oder kationische Polymerisation.

Pfropfungverfahren via Makromonomere:

In diesem Verfahren werden in einem ersten Schritt mit reaktiven Gruppen ausgestattete Polymerblöcke sowohl des Pfropfrückgrates als auch der Seitenketten über solche dem Fachmann grundsätzlich bekannten Polymerisationsverfahren, beispielsweise Polykondensation, Polyaddition oder radikalische, anionische oder kationische Polymerisation, hergestellt und diese beiden reaktiven Polymere (Makromonomere) in einem zweiten Schritt chemisch miteinander unter Ausbildung des Pfropfcopolymers gekoppelt.

Die chemische Kopplungsreaktion kann dabei sowohl in einer Lösung mit einem für beide zu koppelnden Polymeren geeigneten Lösungsmittel als auch in der Schmelzemischung der beiden Polymere erfolgen. Die Schmelzereaktion ist aus umwelttechnischen Gründen bevorzugt, da sie ohne Lösungsmittel auskommt. Derartige Schmelzereaktionen können beispielsweise in Rührkesseln, mit Mischvorrichtungen ausgestatteten kontinuierlichen Rohrreaktoren oder bevorzugt in handelsüblichen Compoundieraggregaten wie Doppelwellenextrudern, Planetwalzenextrudern oder Innenknetern sowie ebenfalls bevorzugt in Filmtrudern durchgeführt werden bei Temperaturen oberhalb der Schmelzetemperaturen beider zu koppelnder Polymere.

Als reaktive Gruppen für die Kopplungsreaktion eignen sich auch in diesem Fall beispielsweise Hydroxyl- , Carboxyl-, Amino-, Doppelbindungen enthaltende Gruppen wie beispielsweise Vinyl, Allyl oder Acryloyl, Carbonyl-, Nitril-, Ester- oder Epoxy-Gruppen, wobei die funktionellen Gruppen in den beiden Arten von Polymerblöcken, die im Pfropfcopolymer das Rückgrat bzw. die Pfropfäste ausbilden, so paarweise aufeinander abgestimmt sein müssen, dass sie eine Kopplungsreaktion, bevorzugt als Kondensations- oder Additionsreaktion, besonders bevorzugt als Additionsreaktion erlauben. Bevorzugt sind hierbei beispielsweise die Kombinationen aus Hydroxyl-, Amino- oder Carboxygruppen als Funktionalisierung des einen Polymers und Epoxygruppen als Funktionalisierung des zweiten Polymers, weiter bevorzugt die Kombinationen aus Amino- oder Carboxygruppen als Funktionalisierung des einen Polymers und Epoxygruppen als Funktionalisierung des zweiten Polymers. Im Falle, dass es sich bei dem Polykondensationspolymer um ein Polycarbonat, einen Polyester oder ein Polyestercarbonat handelt, kommt besonders bevorzugt die Kombinationen aus Carboxygruppen als Funktionalisierung des einen Polymers und Epoxygruppen als Funktionalisierung des zweiten Polymers zum Einsatz. Dabei ist es weiter bevorzugt, dass das Polycarbonat, der Polyester oder das Polyestercarbonat mit Carboxygruppen und das Vinyl(co)polymerisat mit Epoxygruppen funktionalisiert wird.

Bevorzugt werden die funktionellen Gruppen im Polymer, welches die Pfropfäste bildet, endständig eingebracht. Bevorzugt werden als Makromonomer zur Ausbildung der Pfropfäste solche Polymerblöcke eingesetzt, die nur einen geringen Anteil an mehrfach funktionalisierten Polymermolekülen, also solchen Polymermolekülen mit mehr als einer reaktiven funktionellen Gruppe, enthalten. Besonders bevorzugt werden zur Ausbildung der Pfropfäste solche Polymere eingesetzt, die im Zahlenmittel maximal 1,5, weiter bevorzugt maximal 1,3, am meisten bevorzugt maximal 1,1 reaktive funktionelle Gruppen pro Polymermolekül enthalten. Am meisten bevorzugt werden zur Ausbildung der Pfropfäste solche Polymere eingesetzt, die nur eine endständige funktionelle Gruppe enthalten. Dadurch lässt sich die Menge an Verzweigungsstrukturen im Pfropfcopolymer minimieren bzw. die Ausbildung solcher unerwünschter Strukturen verhindern.

Die Herstellung zur Ausbildung der Pfropfäste besonders bevorzugter Carboxy-terminierter Polycarbonate bzw. Polyestercarbonate erfolgt beispielsweise gemäß der Beschreibung in US 4,959,411. Dabei kommen zur Ausbildung von Carboxy-funktionalisierten Endgruppen Carboxy-funktionalisierte Phenole bzw. bevorzugt Derivate, insbesondere Ester Carboxy-funktionalisierter Phenole, besonders bevorzugt tert-Butylester Carboxy-funktionalisierter Phenole, am meisten bevorzugt tert-Butyl-4-Hydroxybenzoat als Kettenabbrecher in der das Polycarbonat oder Polyestercarbonat aufbauenden Polykondensationsreaktion, bevorzugt durchgeführt in einer Phasengrenzflächenphosgenierung von Bisphenolen, zum Einsatz. Im bevorzugten Fall der Verwendung von tert-Butylester Carboxy-funktionalisierter Phenole als Endgruppe ausbildender Kettenabbrecher erfolgt die Freisetzung der endständigen Carboxygruppen in einem nachfolgenden thermischen Pyrolyseschritt, bei dem bei Temperaturen oberhalb von 200°C Isobutylen abgespalten und über einen Unterdruck aus dem Reaktionsgemisch zwecks Verschiebung des chemischen Gleichgewichtes entfernt wird.

Während in den in US 4,959,411 offenbarten Polymeren ausschließlich Carboxy-funktionalisierte Phenole bzw. bevorzugt Derivate, insbesondere Ester Carboxy-funktionalisierter Phenole als Kettenabbrecher zum Einsatz kommen und damit doppelt endständig funktionalisierte Polycarbonate entstehen, empfiehlt es sich zur Herstellung der zur Ausbildung der Pfropfäste im Rahmen dieser Erfindung besonders geeigneten Polymerblöcke Mischungen von solchen Carboxy-funktionalisierte Phenolen bzw. bevorzugt Derivaten, insbesondere Estern Carboxy-funktionalisierter Phenolen mit nicht reaktiv funktionalisierten Phenolen, beispielsweise tert-Butylphenol oder Phenol, als Kettenabbrecher zu verwenden. Dadurch kann die mittlere Carboxy-Funktionalität der entstehenden Polycarbonatblöcke auf das gewünschte zuvor beschriebene Niveau reduziert werden. Bevorzugt kommen in diesen Kettenabbrechermischungen die nicht reaktiven Phenole in einem molaren Anteil von mindestens 50 Mol-%, weiter bevorzugt mindestens 65 Mol-%, besonders bevorzugt mindestens 70 Mol%, besonders bevorzugt mindestens 75 Mol-% zum Einsatz.

Die Herstellung erfindungsgemäßer Pfropfcopolymere aus diesen derartig hergestellten Carboxy- oder Carboxyderivat-funktionalisierten Polycarbonaten kann durch Kopplung mit den Epoxy-Funktionalitäten Glycidylmethacrylatgepfropfter Polymere bzw. mit den Epoxy-Funktionalitäten von Vinyl(co)polymerisaten enthaltend von Glycidylmethacrylat abgeleitete Struktureinheiten gemäß dem Verfahren, welches ebenfalls in US 4,959,411 beschrieben ist, erfolgen. Bei Verwendung derartiger Glycidylmethacrylat-gepfropfter Polymere bzw. Vinyl(co)polymerisate enthaltend von Glycidylmethacrylat abgeleitete Struktureinheiten als Pfropfrückgrat bei der Herstellung des Pfropfcopolymers lässt sich die Anzahl der Pfropfäste $n_s$ im resultierenden Pfropfcopolymer zielgenau durch entsprechende Auswahl des Verhältnisses der molaren Mengen an Glycidylmethacrylat und nicht reaktiven Vinylmonomeren steuern. Die Herstellung solcher Glycidylmethacrylat-modifizierter Polymere ist grundsätzlich dem Fachmann bekannt. Entsprechende Handelsprodukte sind beispielsweise unter Markennamen wie Fine-Blend™ SAG und Fine-Blend™ SOG (beide Fine-blend Polymer Shanghai Co., LTD) oder Lotader™ AX (Arkema) kommerziell erhältlich.

Die Herstellung der besonders bevorzugten doppelt endständig sowie mittelständig gepfropften Pfropfcopolymere kann grundsätzlich nach demselben Verfahren wie zuvor beschrieben durch chemische Kopplung von Makromonomeren erfolgen, wobei in dieser speziellen Ausführungsform der Erfindung dann Blockcopolymere als Pfropfrückgrat, bevorzugt Blockcopolymere bestehend aus Blöcken von Vinyl(co)polymerisaten zum Einsatz kommen.

Im Falle der Herstellung eines doppelt endständig gepfropften Pfropfcopolymers kommt als Pfropfrückgrat ein Blockcopolymer enthaltend mindestens drei Blöcke zum Einsatz, wobei nur die beiden äußeren Blöcke des Blockcopolymers mit reaktiven funktionellen Gruppen gemäß der zuvor genannten Vorzugsbereiche ausgestattet sind und sich in der Mitte des Blockcopolymers, welches als Pfropfrückgrat zum Einsatz kommt, ein Abschnitt bestehend aus mindestens einem Block befindet, der keine zur Kopplung mit den Pfropfastblöcken geeigneten funktionellen Gruppen enthält.

Im Falle der Herstellung eines mittelständig gepfropften Pfropfcopolymers kommt als Pfropfrückgrat ein Blockcopolymer enthaltend mindestens drei Blöcke zum Einsatz, wobei die beiden äußeren Abschnitte des Blockcopolymers jeweils aus mindestens einem Block bestehen, der keine zur Kopplung mit den Pfropfastblöcken geeigneten funktionellen Gruppen enthält, und im mittigen Abschnitt des Blockcopolymers ein Block zum Einsatz kommt, welcher mit reaktiven funktionellen Gruppen gemäß der zuvor genannten Vorzugsbereiche ausgestattet ist.

Als Blöcke, welcher mit reaktiven funktionellen Gruppen ausgestattet sind, kommen hierbei bevorzugt Copolymere, weiter bevorzugt statistische Copolymere aus Glycidylmethacrylat und mindestens einem weiteren Vinylmonomer zum Einsatz.

Die Herstellung solcher als Pfropfrückgrat zur Herstellung von mittelständig und/oder doppelt endständig gepfropften Pfropfcopolymeren geeigneten Blockcopolymere ist dem Fachmann grundsätzlich bekannt. Bevorzugt kommen zur Herstellung solcher strukturell definierter Blockcopolymere aus Blöcken unterschiedlicher chemischer Zusammensetzungen Verfahren der kontrollierten Polymerisation (oft auch als "lebende" Polymerisation bezeichnet) zum Einsatz. Geeignet sind grundsätzlich die lebende anionische Polymerisation, die lebende kationische Polymerisation, die lebende ringöffnende Metathesenpolymerisation, die lebende radikalische Polymerization und die lebende Polykondensation. Bevorzugt kommt ein Verfahren der lebenden radikalischen Polymerisation zum Einsatz, besonders bevorzugt die radikalische Atomtransferpolymerisation ("atom transfer radical polymerization" = ATRP) oder die reversible Additions-Fragmentierungs-Kettentransfer-Polymerisation ("reversible additionfragmentation chain transfer" = RAFT).

Unter einer kontrollierten ("lebenden") Polymerisation versteht man solche Polymerisationen, bei denen keine Kettenabbruchreaktionen und Kettenübertragungen auftreten und die Geschwindigkeit der Kettenstartreaktion sehr viel größer ist als die Geschwindigkeit der Kettenverlängerungsreaktion. Dadurch wird eine Kontrolle von Molmassen mit enger Verteilung sowie die Herstellung chemisch definierter Polymerstrukturen, wie zum Beispiel spezieller Blockcopolymere mit wohldefinierten Sequenzlängen und Blockzusammensetzungen möglich. Dabei werden die Blockcopolymere in mehreren Schritten unter Einsatz unterschiedlicher Monomere oder Monomermischungen in jedem Schritt aufgebaut.

Ein zur Herstellung eines mittelständig gepfropften Pfropfcopolymers als Pfropfrückgrat geeignetes Blockcopolymer aus beispielsweise von Styrol abgeleiteten Struktureinheiten kann somit beispielsweise hergestellt werden durch eines der zuvor genannten Verfahren der lebenden Polymerisation, beispielsweise durch ATRP, indem in einem ersten Schritt zunächst ausschließlich Styrol bis zur gewünschten Kettenlänge polymerisiert wird, danach im zweiten Schritt eine Mischung aus Styrol und Glycidylmethacrylat auf das Polymer aus Schritt 1 polymerisiert wird und zuletzt in einem dritten Schritt auf das Polymer aus Schritt 2 wiederum reines Styrol aufpolymerisiert wird, wobei durch das molare Verhältnis von Styrol und Glycidylmethacrylat im Schritt 2 der Abstand zweier Pfropfäste im mittelständig gepfropften Pfropfcopolymerisat definiert werden kann.

Ein zur Herstellung eines doppelt endständig gepfropften Pfropfcopolymers als Pfropfrückgrat geeignetes Blockcopolymer aus beispielsweise von Styrol abgeleiteten Struktureinheiten kann in analoger Art und Weise beispielsweise hergestellt werden durch eines der zuvor genannten Verfahren der lebenden Polymerisation, beispielsweise durch ATRP, indem in einem ersten Schritt zunächst eine Mischung aus Styrol und Glycidylmethacrylat bis zur gewünschten Kettenlänge polymerisiert wird, danach im zweiten Schritt ein Block aus reinem Styrol auf das Polymer aus Schritt 1 polymerisiert wird und zuletzt in einem dritten Schritt auf das Polymer aus Schritt 2 wiederum eine Mischung aus Styrol und Glycidylmethacrylat aufpolymerisiert wird, wobei durch das molare Verhältnis von Styrol und Glycidylmethacrylat in den Schritten 1 und 3 der Abstand zweier Pfropfäste in den beiden endständigen Blöcken definiert werden kann. Dabei kann das Verhältnis aus Styrol und Glycidylmethacrylat in den beiden endständigen Blöcken gleich oder unterschiedlich gewählt und die Blocklängen der drei Blöcke ebenfalls unabhängig voneinander ausgestaltet werden.

Experimentelle Bestimmung der Strukturmerkmale der erfindungsgemäßen Pfropfcopolymere Die Strukturmerkmale der erfindungsgemäßen Pfropfcopolymere können in mehrschrittigen Verfahren analytisch ermittelt werden.

Die Strukturmerkmale von erfindungsgemäßen Pfropfcopolymeren, bei denen das Pfropfrückgrat ein Vinyl(co)polymerisat und die Seitenketten ein Polykondenationspolymer sind, können beispielsweise über ein analytisches Verfahren ermittelt werden, bestehend aus den folgenden Schritten:

1.) Bestimmung der chemischen Zusammensetzung, das heißt der Art und Monomerzusammensetzung der Blöcke A und B des Pfropfcopolymers mittels kernmagnetische Resonanzspektroskopie (NMR), insbesondere $^{1}H$ NMR und/oder $^{13}C$ NMR. Das Lösungsmittel wird dabei für das Pfropfcopolymer entsprechend ausgewählt. Insbesondere bei Pfropfcopolymeren aus Blöcken A und B mit stark unterschiedlicher Polarität, beispielsweise B = Polyolefin und A = aromatisches Polycarbonat ist es oft zur vollständigen Lösung des Pfropfcopolymers erforderlich, die NMR-Spektroskopie bei hohen Temperaturen >60°C durchzuführen. Hierfür eignen sich bevorzugt mehrfach chlorierte Lösungsmittel wie beispielsweise deuteriertes Dichlorethan, deuteriertes Tetrachlorethan, Tetrachlormethan oder deuteriertes Di-, Tri-, Tetrachlorbenzol.

2.) Bestimmung des Gewichtsanteils $x_A$ der Blöcke des Polymers A im Pfropfcopolymer aus den NMR-spektroskopischen Daten, die im Schritt 1 ermittelt wurden.

3.) Bestimmung der Anzahl $n_s$ der Pfropfäste mittels NMR-Spektroskopie, insbesondere $^1H$ NMR und/oder $^{13}C$ NMR, aus der Intensität von NMR-Signalen, die entweder den Kohlenstoffatomen zuzuordnen sind, die an der kovalenten Pfropfbindung unmittelbar beteiligt oder dieser Pfropfbindung benachbart sind, oder den Protonen zuzuordnen sind, die der kovalenten Pfropfbindung benachbart sind.

4.) Bestimmung der Molekulargewichtsverteilung des Pfropfcopolymers mittels Gelpermeationschromatographie (GPC) und Ermittlung des zahlengemittelten Molekulargewichts $M_n$ daraus, wobei die an dem Pfropfcopolymer ermittelten GPC-Daten gegen beide Polymere A und B als Standard kalibriert mit Ermittlung der Werte $M_n(A)$ und $M_n(B)$ ausgewertet werden, wobei $M_{n,A}$ und $M_{n,B}$ die Molekulargewichte kalibriert gegen Standards des Polymers A bzw. B darstellen, und daraus der Wert $M_n$ des Pfropfcopolymers berechnet wird gemäß der Formel $M_n = x_A \cdot M_{n,A} + (1 - x_A) \cdot M_{n,B}$. Auch bei der GPC ist es insbesondere bei Pfropfcopolymeren aus Blöcken A und B mit stark unterschiedlicher Polarität, beispielsweise B = Polyolefin und A = aromatisches Polycarbonat oft zur vollständige Lösung des Pfropfcopolymers erforderlich, die Untersuchung bei hohen Temperaturen >60°C durchzuführen. Hierfür eignen sich beispielsweise und bevorzugt dieselben Lösungsmittel wie für die NMR-Spektroskopie im Schritt 1, wobei für die GPC die Verwendung deuterierter Lösungsmittel nicht erforderlich ist.

5.) Basische Verseifung bzw. sauer oder basisch katalysierte vollständige Hydrolyse der Polykondensationsblöcke (das heißt vollständige Rückspaltung der Polykondensationspolymeranteile in die monomeren Baueinheiten, aus denen sie aufgebaut sind) und Abtrennung des zurückbleibenden unversehrten Vinyl(co)polymerisatblocks (Pfropfrückgrat) durch Fällung mit anschließender Wäsche und Trockung. Bevorzugt erfolgt die Rückspaltung der Polykondensationspolymeranteile in die monomeren Baueinheiten durch basische Verseifung in beispielsweise ethanolischer Kaliumhydroxidlösung bei erhöhter Temperatur, bevorzugt unter Rückfluss.

6.) Bestimmung der Molekulargewichtsverteilung des im Schritt 5 abgetrennten Vinyl(co)polymerisatblocks (Pfropfrückgrat) mittels Gelpermeationschromatographie (GPC) und Ermittlung des zahlengemittelten Molekulargewichts $M_n(B)$ daraus, wobei die GPC-Messung gegen das jeweilige Vinyl(co)polymerisat im Pfropfcopolymerisat als Standard kalibriert wird. Das Lösungsmittel wird dabei für das jeweilige Vinyl(co)polymerisat ausgewählt. So eignet sich beispielsweise für Polystyrol, Polymethylmethacrylat oder Styrol-Acrylnitril-Copolymere (SAN), welche jeweils Glycidylmethacrylat als pfropfaktive Stelle als Co- bzw. Termonomer-Einheit enthalten, bevorzugt Dichlormethan oder Chlorform als Lösungsmittel. In diesen Fällen ist in der Regel eine GPC bei Raumtemperatur möglich und bevorzugt. Bei Polyolefinen dagegen, insbesondere bei teilkristallinen Polyolefinen und Polyolefinen mit höherem Molekulargewicht, ist es oft zur vollständigen Lösung des Pfropfcopolymers erforderlich, die GPC bei hohen Temperaturen >60°C durchzuführen. Hierfür eignen sich bevorzugt mehrfach chlorierte Lösungsmittel wie beispielsweise Dichlorethan, Tetrachlorethan, Tetrachlormethan oder Di-, Tri-, Tetrachlorbenzol, insbesondere ortho-Dichlorbenzol.

7.) Berechnung des Wertes von $n_s \cdot M_n(A)$ aus dem im Schritt 4 bestimmten Wert von $M_n$ und den im Schritt 6 bestimmten Wert von $M_n(B)$ über die Gleichung $n_s \cdot M_n(A) = M_n - M_n(B)$ sowie Berechnung des Wertes von $M_n(A)$ durch Division dieser Größe $n_s \cdot M_n(A)$ durch den im Schritt 3 bestimmten Wert von $n_s$.

Zur Ermittlung der Strukturmerkmale von erfindungsgemäßen Pfropfcopolymeren, bei denen das Pfropfrückgrat das Polykondensationpolymer und die Seitenketten das Vinyl(co)polymerisat sind, kann ein ähnliches analytisches Verfahren verwendet werden, welches sich von dem Verfahren zuvor in den Schritten 1.) bis 4.) nicht unterscheidet, wobei Schritt 4.) gefolgt wird von folgenden Schritten:

5.) Basische Verseifung bzw. sauer oder basisch katalysierte vollständige Hydrolyse des Polykondensationsblocks, das heißt vollständige Rückspaltung des Pfropfrückgrats in seine monomeren Baueinheiten analog zu dem für den Fall zuvor beschrieben, und anschließende Abtrennung der zurückbleibenden unversehrten Vinyl(co)polymerisatblöcke (Pfropfäste) durch Fällung mit anschließender Wäsche und Trocknung.

6.) Bestimmung der Molekulargewichtsverteilung der im Schritt 5 abgetrennten Vinyl(co)polymerisatblöcke (Pfropfäste) mittels Gelpermeationschromatographie (GPC) und Ermittlung des zahlengemittelten Molekulargewichts $M_n(A)$ daraus, wobei die GPC-Messung gegen das jeweilige Vinyl(co)polymerisat im Pfropfcopolymerisat als Standard kalibriert wird. Das Lösungsmittel wird wie oben beschrieben ausgewählt.

7.) Berechnung des Wertes $M_n(B)$ über die Gleichung $M_n(B) = M_n - n_s \cdot M_n(A)$ aus dem im Schritt 4 bestimmten Wert von $M_n$, dem im Schritt 6 bestimmten Wert von $M_n(A)$ und dem im Schritt 3 bestimmten Wert von $n_s$.

Im Falle von Pfropfcopolymeren bestehend aus Blöcken aus aromatischem Polycarbonat sowie Blöcken aus Polyolefin werden die NMR und GPC Messungen am Pfropfpolymer und an den Polyolefinblöcken optional enthaltend pfropfaktive Einheiten bevorzugt in (deuteriertem) ortho-Dichlorbenzol bei einer Temperatur 80 °C durchgeführt.

Im Falle von Pfropfcopolymeren bestehend aus Blöcken aus aromatischem Polycarbonat sowie Blöcken aus einem Polymer ausgewählt aus Polystyrol, Polymethylmethacrlyat und Styrol-Acrylnitril Copolymeren optional enthaltend

pfropfaktive Einheiten werden die NMR Messungen bevorzugt in deuteriertem Dichlormethan bei Raumtemperatur durchgeführt.

Die GPC Messungen am Pfropfcopolymer erfolgen bevorzugt in Dichlormethan bei Raumtemperatur und die GPC Messungen an den Vinyl(co)polymerblöcken in Tetrahydrofuran bei Raumtemperatur.

Herstellung von Formmassen

Aus den erfindungsgemäßen Pfropfcopolymeren und weiteren Komponenten wie beispielsweise Homopolymeren A und B oder Polymeren mit ähnlicher Polarität bzw. chemischer Struktur wie die der Homopolymere A und B und optional weiteren Komponenten können Formmassen hergestellt werden.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 180°C bis 320°C, besonders bevorzugt bei 200 bis 300°C, ganz besonders bevorzugt bei 240°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erhaltenen Formmassen sind ein weiterer Gegenstand der vorliegenden Erfindung.

Die erfindungsgemäßen Formmassen können zur Herstellung von Formkörpern verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in den Förderextruder einer Spritzgussmaschine zu dosieren, die erfindungsgemäße Formmasse dabei in dem Förderextruder herzustellen und durch entsprechenden Austrag der Formmasse in eine Spritzgussform direkt zu Formkörper zu verarbeiten (Compoundierspritzguss).

Ein weiterer Gegenstand der vorliegenden Erfindung ist somit ein Formkörper, der aus einer erfindungsgemäßen Zusammensetzung oder aus einer erfindungsgemäßen Formmasse erhältlich ist oder eine solche Formmasse enthält.

Nachfolgend werden weitere Ausführungsformen der vorliegenden Erfindung beschrieben:

1. Pfropfcopolymer der allgemeinen Struktur B-$(A)_{ns}$ bestehend aus Blöcken zweier in ihrer chemischen Zusammensetzung unterschiedlicher Polymere A und B, wobei eines der Polymere ein Polykondensationspolymer ist ausgewählt aus der Gruppe bestehend aus Polycarbonaten, Polyestercarbonaten, Polyestern und Polyamiden und das andere Polymer ein Polymerisat aus mindestens einem Vinylmonomeren ist,
dadurch gekennzeichnet, dass

   (i) das zahlengemittelte Molekulargewicht des Blocks aus dem Polymer B $M_n$(B) mindestens 13 kg/mol, bestimmt durch eine Kombination aus Gelpermeationschromatographie und NMR-Spektroskopie beträgt,
   (ii) die Anzahl der Seitenketten im Pfropfcopolymer $n_s$, bestimmt durch NMR-Spektroskopie, mindestens 3 beträgt,
   (iii) das zahlengemittelte Molekulargewicht der Blöcke aus dem Polymer A $M_n$(A), bestimmt durch eine Kombination von Gelpermeationschromatographie und NMR-Spektroskopie, mindestens 1,5 kg/mol beträgt und
   (iv) $n_s$ multipliziert mit $M_n$(A) mindestens 13 kg/mol ergibt.

2. Pfropfcopolymer gemäß Ausführungsform 1, wobei Polymer A ausgewählt ist aus der Gruppe bestehend aus aromatischen Polycarbonaten, aromatischen Polyestercarbonaten und aromatischen Polyestern.
3. Pfropfcopolymer gemäß Ausführungsform 1 oder 2, wobei Polymer A ein aromatisches Polycarbonat ist.
4. Pfropfcopolymer gemäß einer der vorhergehenden Ausführungsformen, wobei Polymer B ein Polymerisat aus einem oder mehreren unterschiedlichen Vinylmonomeren, ausgewählt aus der Gruppe bestehend aus Styrol, Styrolderivaten, Acrylnitril, Acrylsäureestern, Acrylsäureesterderivaten, Olefinen, Maleinsäureimid und Maleinsäureimidderivate ist.
5. Pfropfcopolymer gemäß Ausführungsform 4, wobei die Vinylmonomere ausgewählt sind aus der Gruppe bestehend aus Styrol, Acrylnitril, Methylmethacrylat, Glycidylmethacrylat und Olefinen.

6. Pfropfcopolymer gemäß einer der vorhergehenden Ausführungsformen, wobei $n_s$ bei mindestens 4 liegt.

7. Pfropfcopolymer gemäß einer der vorhergehenden Ausführungsformen, wobei $n_s$ bei mindestens 5 liegt.

8. Pfropfcopolymer gemäß einer der vorhergehenden Ausführungsformen, wobei $M_n(A)$ bei mindestens 3,0 kg/mol liegt.

9. Pfropfcopolymer gemäß einer der vorhergehenden Ausführungsformen, wobei $M_n(B)$ bei mindestens 20 kg/mol liegt.

10.Pfropfcopolymer gemäß einer der vorhergehenden Ausführungsformen, wobei $M_n(B)$ bei mindestens 23 kg/mol liegt.

11. Pfropfcopolymer gemäß einer der vorhergehenden Ausführungsformen, wobei die folgenden Merkmale vorliegen:

(i) $M_n(B)$ ist mindestens 23 kg/mol,
(ii) $n_s$ ist mindestens 5,
(iii) $M_n(A)$ ist mindestens 3,0 kg/mol,
(iv) $n_s$ multipliziert mit $M_n(A)$ ergibt mindestens 13 kg/mol.

12. Pfropfcopolymer gemäß einer der vorhergehenden Ausführungsformen, wobei $n_s$ bei mindestens 6 liegt.

13. Pfropfcopolymer gemäß einer der vorhergehenden Ausführungsformen, wobei $M_n(A)$ bei mindestens 4,5 kg/mol liegt.

14. Pfropfcopolymer gemäß einem der vorhergehenden Ansprüche, wobei die folgenden Merkmale vorliegen:

(i) $M_n(B)$ ist mindestens 23 kg/mol,
(ii) $n_s$ ist mindestens 6,
(iii) $M_n(A)$ ist mindestens 4,5 kg/mol,
(iv) $n_s$ multipliziert mit $M_n(A)$ ergibt mindestens 13 kg/mol.

15. Pfropfcopolymer gemäß einer der vorhergehenden Ausführungsformen, wobei $M_n(A) \cdot n_s / [M_n(B) + M_n(A) \cdot n_s]$ im Bereich von 0,25 bis 0,75 liegt.

16. Pfropfcopolymer gemäß einer der vorhergehenden Ausführungsformen, wobei $M_n(A) \cdot n_s / [M_n(B) + M_n(A) \cdot n_s]$ im Bereich von 0,40 bis 0,70 liegt.

17. Pfropfcopolymer gemäß einer der vorhergehenden Ausführungsformen, wobei die folgenden Merkmale vorliegen:

(i) $M_n(B)$ ist mindestens 23 kg/mol,
(ii) $n_s$ ist mindestens 6,
(iii) $M_n(A)$ ist mindestens 4,5 kg/mol,
(iv) $n_s$ multipliziert mit $M_n(A)$ ergibt mindestens 13 kg/mol,
(v) $M_n(A) \cdot n_s / [M_n(B) + M_n(A) \cdot n_s]$ liegt im Bereich von 0,40 bis 0,70.

18. Pfropfcopolymer gemäß einer der vorhergehenden Ausführungsformen, wobei $M_n(A)$ bei mindestens 5,3 kg/mol liegt.

19. Pfropfcopolymer gemäß einer der vorhergehenden Ausführungsformen, wobei $M_n(B)$ bei mindestens 30 kg/mol liegt.

20. Pfropfcopolymer gemäß einer der vorhergehenden Ausführungsformen, wobei $M_n(A) \cdot n_s / [M_n(B) + M_n(A) \cdot n_s]$ im Bereich von 0,40 bis 0,60 liegt.

21. Pfropfcopolymer gemäß einer der vorhergehenden Ausführungsformen, wobei $n_s$ multipliziert mit $M_n(A)$ mindestens 20 kg/mol ergibt.

22. Pfropfcopolymer gemäß einer der vorhergehenden Ausführungsformen, wobei $n_s$ multipliziert mit $M_n(A)$ mindestens 30 kg/mol ergibt.

23. Pfropfcopolymer gemäß einer der vorhergehenden Ausführungsformen, wobei $n_s$ multipliziert mit $M_n(A)$ mindestens 35 kg/mol ergibt.

24. Pfropfcopolymer gemäß einer der vorhergehenden Ausführungsformen, wobei $n_s$ bei maximal 15 liegt.

25. Pfropfcopolymer gemäß einer der vorhergehenden Ausführungsformen, wobei $n_s$ bei maximal 10 liegt.

26. Pfropfcopolymer gemäß einer der vorhergehenden Ausführungsformen, wobei $n_s$ bei maximal 8 liegt.

27. Pfropfcopolymer gemäß einer der vorhergehenden Ausführungsformen, wobei $M_n(A)$ bei maximal 15 kg/mol liegt.

28. Pfropfcopolymer gemäß einer der vorhergehenden Ausführungsformen, wobei $M_n(A)$ bei maximal 9 kg/mol liegt.

29. Pfropfcopolymer gemäß einer der vorhergehenden Ausführungsformen, wobei $M_n(A)$ bei maximal 8 kg/mol liegt.

30. Pfropfcopolymer gemäß einer der vorhergehenden Ausführungsformen, wobei $M_n(B)$ bei maximal 200 kg/mol liegt.

31. Pfropfcopolymer gemäß einer der vorhergehenden Ausführungsformen, wobei $M_n(B)$ bei maximal 100 kg/mol liegt.

32. Pfropfcopolymer gemäß einer der vorhergehenden Ausführungsformen, wobei $M_n(B)$ bei maximal 50 kg/mol liegt.

33. Pfropfcopolymer gemäß einer der vorhergehenden Ausführungsformen, wobei $n_s$ multipliziert mit $M_n(A)$ maximal 120 kg/mol ergibt.

34. Pfropfcopolymer gemäß einer der vorhergehenden Ausführungsformen, wobei $n_s$ multipliziert mit $M_n(A)$ maximal 80 kg/mol ergibt.

35. Pfropfcopolymer gemäß einer der vorhergehenden Ausführungsformen, wobei $n_s$ multipliziert mit $M_n(A)$ maximal 50 kg/mol ergibt.

36. Pfropfcopolymer gemäß einer der vorhergehenden Ausführungsformen, wobei die Architektur des Pfropfcopolymers ausgewählt ist aus doppelt endständig gepfropft und mittelständig gepfropft.

37. Pfropfcopolymer gemäß einer der vorhergehenden Ausführungsformen, wobei die Architektur des Pfropfcopolymers mittelständig gepfropft ist.

38. Verwendung eines Pfropfcopolymers gemäß einer der vorhergehenden Ausführungsformen zur Herabsetzung der Phasengrenzflächenspannung in Mischungen enthaltend die Polymere A und B oder Mischungen von Polymeren mit vergleichbarer Polarität.

39. Polymerzusammensetzung enthaltend die Polymere A und B sowie als Komponente C ein Pfropfcopolymer gemäß einer der vorhergehenden Ausführungsformen 1 bis 37, wobei die Polymere A und B die gleiche chemische Struktur aufweisen wie die Blöcke der Polymere A und B im Pfropfcopolymer gemäß Komponente C.

40. Polymerzusammensetzung gemäß Ausführungsform 39, wobei das Verhältnis des Massenanteils von Polymer A in der Polymerzusammensetzung, bezogen auf die Summe aus den Polymeren A und B in der Zusammensetzung, zum Massenanteil der Pfropfäste im Pfropfcopolymer gemäß Komponente C bei 0,6 bis 1,4 liegt.

41. Polymerzusammensetzung gemäß Ausführungsform 40, wobei das Verhältnis bei 0,7 bis 1,3 liegt.

42. Polymerzusammensetzung gemäß Ausführungsform 40, wobei das Verhältnis bei 0,8 bis 1,2 liegt.

43. Polymerzusammensetzung gemäß einer der Ausführungsformen 39 bis 42, wobei das Pfropfcopolymer in einer Konzentration von 0,1 bis 20 Gew.-% zum Einsatz kommt.

44. Polymerzusammensetzung gemäß einer der Ausführungsformen 39 bis 42, wobei das Pfropfcopolymer in einer Konzentration von 1,0 bis 10 Gew.-% zum Einsatz kommt.

45. Polymerzusammensetzung gemäß einer der Ausführungsformen 39 bis 42, wobei das Pfropfcopolymer in einer Konzentration von 2 bis 5 Gew.-% zum Einsatz kommt.

46. Formmasse erhalten aus einer Zusammensetzung gemäß einer der Ausführungsformen 39 bis 45.

47. Formkörper enthaltend eine Zusammensetzung gemäß einer der Ausführungsformen 39 bis 45.

48. Formkörper hergestellt aus einer Formmasse gemäß Ausführungsform 46.

## Beispiele

### Simulation der Grenzflächenspannung

Es wurde der Einfluss der Struktur eines Pfropfcopolymers, das aus Blöcken zweier verschiedener Polymere A und B aufgebaut ist, auf die Grenzflächenspannung an der Phasengrenzfläche in Polymerblends aus den Homopolymeren A und B mittels einer computerunterstützen Simulation untersucht. Dabei wurde eine dissipative Partikeldynamik-Simulation verwendet. Die Simulation erfolgte unter Einsatz des Open-Source_Programms LAMMPS ("LAMMPS - a flexible simulation tool for particle-based materials modeling at the atomic, meso, and continuum scales", A. P. Thompson, H. M. Aktulga, R. Berger, D. S. Bolintineanu, W. M. Brown, P. S. Crozier, P. J. in 't Veld, A. Kohlmeyer, S. G. Moore, T. D. Nguyen, R. Shan, M. J. Stevens, J. Tranchida, C. Trott, S. J. Plimpton, Comp Phys Comm, 271 (2022) 10817).

Das Vorgehen bei den durchgeführten Simulationen ist im Folgenden dargestellt. Aus Gründen der sprachlichen Vereinfachung sind einige Erläuterungen in der Gegenwartsform verfasst, es ist aber die tatsächlich durchgeführte Verfahrensweise gemeint.

In der dissipativen Partikeldynamik-Simulation ("dissipative particle dynamics" = DPD), werden vergleichsweise große Moleküle, in diesem Fall Polymere, durch Kugeln ("Beads") modelliert, die durch paarweise Wechselwirkungspotenziale in Interaktion treten. Eine Kugel in der DPD-Simulation repräsentiert dabei einen Cluster bestehend aus mehreren Monomereinheiten des Polymers. Diese Kugeln bewegen sich unter dem Einfluss ihrer Wechselwirkungskräfte gemäß der Newtonschen Bewegungsgleichungen. Die Gesamtkraft, die dabei auf jede einzelne Kugel wirkt, wird durch die Summe konservativer, dissipativer und zufälliger Kräfte dargestellt. Die Simulation verwendet dabei als charakteristische Größen $r_c$ als Längeneinheit ("cut-off distance"), $m$ als Massenheinheit, $k_BT$ als Energieeinheit (mit $k_b$ als

Boltzmann-Konstante und T als Temperatur) und $t_{dpd} = r_c\sqrt{m/k_BT}$ als Zeiteinheit.

Im Folgenden werden die Kugeln, aus denen die Homopolymere A und B aufgebaut sind, als a bzw. b bezeichnet. Gleiches gilt für die Kugeln, aus denen die entsprechenden Blöcke der Pfropfcopolymere aufgebaut sind. Daraus ergibt sich eine vereinfachte Charakterisierung der Pfropfcopolymere über drei charakteristische Größen ($l_b$, $l_s$ und $n_s$) $l_b$ ist dabei die Anzahl der Kugeln, aus denen das Rückgrat ("Backbone") des Pfropfcopolymers aufgebaut ist und somit ein Maß für dessen Molekulargewicht $l_s$ ist die Anzahl der Kugeln, aus denen ein Pfropfast aufgebaut ist und somit ein Maß für dessen Molekulargewicht $n_s$ ist die Anzahl der Seitenketten (Pfropfäste), die auf das Pfropfcopolymerrückgrat aufgepfropft sind, wobei in der Simulation diese Seitenketten mit Ausnahme der weiter unten definierten drei speziellen Molekülarchitekturen (ii) bis (iv) immer äquidistant auf dem gesamten Pfropfcopolymerrückgrat verteilt aufgepfropft wurden. Die Begrifflichkeiten "Pfropfast" und "Seitenkette" werden hier synonym verwendet.

Eine spezielle Ausführungsform solcher im Rahmen der Simulationen untersuchten Pfropfcopolymere sind somit gleichmäßig äquidistant gepfropfte Pfropfcopolymere. In derartigen Pfropfcopolymeren sind die Pfropfäste auf dem gesamten Pfropfcopolymerrückgrat gleichmäßig äquidistant verteilt. Es ergibt sich somit ein Abstand der Seitenketten $l_{sp}$ (in der Einheit von Anzahl von Kugeln), der sich über die Gleichung $l_{sp} = 1 + [(l_b - n_s)/(n_s + 1)]$ berechnet.

Im Rahmen der Beispiele in dieser Anmeldung wurde für derartige gleichmäßig äquidistant gepfropfte Pfropfcopolymere eine spezielle Nomenklatur definiert: Beispielsweise bezeichnet die Nomenklatur $b_{31}(a_4)_3$ein Pfropfcopolymer, welches aufgebaut ist aus einem Pfropfcopolymerrückgrat bestehend aus 31 Kugeln vom Typ b, wobei auf dieses Copolymerrückgrat 3 Blöcke aufgebaut aus jeweils 4 Kugeln vom Typ a äquidistant verteilt aufgepfropft sind. Die Architektur derartiger gleichmäßig äquidistant gepfropfter Pfropfcopolymere, die der Simulation zu Grunde gelegt wurden, ist in Abbildung 2 schematisch am Beispiel des Pfropfcopolymers $b_{31}(a_4)_3$dargestellt. Das in Abbildung 2 beispielhaft dargestellte Pfropfcopolymer-Molekül $b_{31}(a_4)_3$besteht somit aus insgesamt 31 Kugeln vom Typ b und 3·4 = 12 Kugeln vom Typ a.

Die Kugelgröße wurde in den im Rahmen dieser Erfindung durchgeführten DPD-Simulationen dabei so gewählt, dass die Massen der Kugeln vom Typ a und b so ähnlich sind, wie es die Molekularmassen der Monomereinheiten zulassen, d.h. im Wesentlichen sind die Molekularmassen der Kugeln vom Typ a und b gleich. Somit ergibt sich im Pfropfcopolymer ein Massenanteil der Polymerblöcke A und B, welcher im Wesentlichen dem Anteil der Kugeln vom Typ a und b im Pfropfcopolymer entspricht. Der Anteil der Kugeln vom Typ b in einem Pfropfcopolymer-Molekül bestehend aus einem Pfropfcopolymerrückgrat aus Polymer A und Pfropfästen aus Polymerblöcken B berechnet sich dabei gemäß der Gleichung $x = n_s \cdot l_s / (l_b + n_s \cdot l_s)$.

Im Rahmen dieser Erfindung wurden DPD-Simulationen für unterschiedliche gleichmäßig äquidistant gepfropfte Pfropfcopolymere gemäß der Architektur in Abbildung 2 mit systematisch variierten Werten von $n_{s,}$ $l_s$ und $l_b$ durchgeführt.

Weiterhin wurden Pfropfcopolymer-Architekturen vergleichend miteinander simuliert, in denen sowohl das Molekulargewicht des Copolymerrückgrats, die Anzahl der Pfropfäste und das Molekulargewicht der Pfropfäste bei $l_b$=47, $l_s$=8 und $n_s$=11 konstant gehalten wurden, aber die Pfropfäste in unterschiedlicher Weise auf das Copolymerrückgrat verteilt angeordnet, d.h. aufgepfropft wurden. Neben dem Pfropfcopolymer (i) mit der Architektur gemäß Abbildung 1, in dem die Pfropfäste gleichmäßig und äquidistant auf dem Copolymerrückgrat angeordnet sind ("gleichmäßig äquidistant gepfropft"), wurden solche Pfropfcopolymere, jeweils mit einem Abstand der Seitenketten von $l_{sp}$=1, simuliert, (ii) bei denen alle 11 Pfropfäste vollständig an einem Ende des Pfropfcopolymerrückgrates angeordnet waren ("einfach endständig gepfropft"), (iii) bei denen 5 bzw. 6 der insgesamt 11 Pfropfäste jeweils an den beiden Enden des Pfropfcopolymerrückgrates angeordnet waren ("doppelt endständig gepfropft") und (iv) bei denen alle 11 Pfropfäste in der Mitte des Pfropfcopolymerrückgrates des Pfropfcopolymers angeordnet waren ("mittelständig gepfropft"). Die Molekulararchitekturen dieser speziellen drei Pfropfcopolymere (ii) bis (iv) sind in Abbildung 1 schematisch dargestellt und der Architektur des gleichmäßig äquidistant gepfropften Pfropfcopolymers (i) gegenübergestellt. Im Sinne der zuvor beschriebenen Nomenklatur lassen sie die vier Pfropfcopolymere (i) - (iv) wie folgt beschreiben, wobei die eckigen Klammern jeweils einen zusammenhängenden Abschnitt eine Homopolymer-Blocks oder Pfropfcopolymer-Blocks umfassen:

(i) $b_{47}(a_8)_{11}$
(ii) $[b_{11}(a_8)_{11}]$ - $[b_{36]}$
(iii) $[b_5(a_8)_5]$ - $[b_{36]}$ - $[b_6(a_8)_6]$
(iv) $[b_{18}]$ - $[b_{11}(a_8)_{11}]$ - $[b_{18}]$

Die Simulation der Phasenverträglichkeitsvermittlungseffizienz bedingt durch Pfropfcopolymere, aufgebaut aus Blöcken der Polymere A und B, in zweiphasigen Blends der Homopolymere A und B umfasste die folgenden Verfahrensschritte:

1. Ausbildung einer Startkonfiguration der Moleküle in der Simulationsbox

Der Verfahrensschritt 1 umfasste die folgenden zwei Teilschritte:

1.1 Es wurden zunächst die kartesischen Koordinaten jeweils eines Homopolymer-Moleküls vom Typ A und B sowie eines Pfropfcopolymer-Moleküls, aufgebaut aus Blöcken der Polymere A und B, über die Koordinaten der diese Polymere aufbauende Kugeln festgelegt. Die anfängliche Bindungslänge zwischen zwei Kugeln wurde dabei festgelegt auf den Wert 0,2· $r_c$. Während der Simulation ändert sich die Bindungslänge unter dem Einfluss der Wechselwirkungskräfte, d.h. die finalen Bindungslängen im simulierten Gleichgewichtszustand entsprechen im Allgemeinen nicht den Werten im Startzustand der Simulation.

1.2 In Summe wurden 162000 DPD-Kugeln in einer periodischen Box mit der Dimension 30 × 30 × 60 $r_c^3$ weitgehend gleichmäßig statistisch unter Vermeidung von Molekülüberlappungen verteilt. Somit resultierte eine Kugeldichte von 3 $r_c^{-3}$, welche gemäß allgemeiner Expertenerfahrung erlaubt, die Thermodynamik von Fluiden richtig wiederzugeben. Die Startkonfiguration wurde dabei mit einer Abstandstoleranz von 0,5 $r_c$ dargestellt. In diesem Verfahrensschritt 1.2 wurde die Anzahl von Homopolymer-Molekülen A und B so gewählt, dass gleiche Massenkonzentrationen für beide Homopolymere resultierten, d.h. die Simulation erfolgt in einem Blend der Homopolymere A und B mit einem Massenanteil der Homopolymere von jeweils 50 Gew.-%. Dabei wurden die Polymermoleküle vom Typ A und B aus dem Verfahrensschritt 1.1 repliziert und in jeweils unterschiedlichen Hälften der Simulationsbox platziert. Für beide Homopolymere A und B wurden Moleküle bestehend aus jeweils 60 Kugeln in der Simulation verwendet. Danach wurden $n_c$ = 200 Pfropfcopolymer-Moleküle der jeweiligen Architektur nahe der Grenzfläche zwischen den Homopolymeren A und B platziert. Durch diese Startkonfiguration lässt sich die Ausbildung eines thermodynamischen Gleichgewichtszustands in der Grenzfläche während der DPD-Simulation beschleunigen. In jeder Simulation haben alle 200 Pfropfcopolymer-Moleküle die gleiche Architektur hinsichtlich der jeweils ausgewählten Werte von $n_{s,}$ $l_s$ und $l_b$ und der räumlichen Verteilung der Pfropfäste auf dem Pfropfrückgrat.

2. Simulation der Dynamik der Polymermoleküle bis in den thermodynamischen Gleichgewichtszustand

Die Positionen und Impulse der DPD-Beads wurden in diskreten Zeitintervall-Schritten im kontinuierlichen Phasenraum berechnet. Die Bewegung wurde dabei durch einen Algorithmus simuliert, welcher die klassische Newtonsche Bewegungsgleichung (4) numerisch löst

$$\dot{\boldsymbol{r}}_{\boldsymbol{i}} = \frac{\boldsymbol{P}_i}{m_i} \text{ und } \dot{\boldsymbol{P}}_{\boldsymbol{i}} = \boldsymbol{f}_{\boldsymbol{i}} \qquad (4).$$

In Gleichung (4) ist $\boldsymbol{f_i}$ die Kraft, die auf die Kugel $i$ mit der Masse $m_i$ durch die Summe der anderen Kugeln ausgeübt wird, und $\boldsymbol{P_i}$ der Impuls dieser Kugel. Die schrittweise numerische Integration von Gleichung (1) erfolgte unter Anwendung des Verlet-Algorithmus.

Die Kraft $\boldsymbol{f_i}$, welche auf die Kugel $i$ durch das Ensemble der anderen Kugeln ausgeübt wird, wird dabei durch Gleichung (5) als Summe der paarweisen Wechselwirkungskräfte $\boldsymbol{F_{ij}}$ der Kugel $i$ mit den jeweils anderen Kugeln $j$ in der Simulationsbox beschrieben, wobei diese paarweisen Wechselwirkungskräfte einen konservativen Kraftanteil $F_{ij}^C$, einen dissipativen Kraftanteil $\boldsymbol{F}_{ij}^D$ und einen zufälligen Kraftanteil $F_{ij}^R$ umfassen:

$$\boldsymbol{f}_i = \sum_{i \neq j}\left(\boldsymbol{F}_{ij}^C + \boldsymbol{F}_{ij}^D + \boldsymbol{F}_{ij}^R\right) \qquad (5)$$

Der dissipative Kraftanteil $\boldsymbol{F}_{ij}^D = -\eta\omega^D(\boldsymbol{r}_{ij})(\boldsymbol{v}_{ij}\boldsymbol{e}_{ij})\boldsymbol{e}_{ij}$ und der zufällige Kraftanteil $\boldsymbol{F}_{ij}^R = \sigma\omega^R(\boldsymbol{r}_{ij})\xi_{ij}\Delta t^{-1/2}\boldsymbol{e}_{ij}$ wirken dabei gemeinsam als Thermostat, wobei $\eta$ und $\sigma$ den Reibungsparameter sowie die Rauschamplitude darstellen mit $\eta = \sigma^2/2k_BT$; $r_{ij} = r_i - r_j$, $v_{ij} = v_i - v_j$ als relative Geschwindigkeit der Kugeln $i$ und $j$ und $\boldsymbol{e_{ij}}$ = $r_{ij}/r_{ij}$ . $\omega^D(r_{ij})$ und $\omega^R(r_{ij})$ sind die ortsabhängigen Wichtungsfunktionen für die dissipativen bzw. zufälligen Kraftanteile.

$\xi_{ij}$ ist eine Gauss-verteilte Zufallszahl mit einem Mittelwert von Null für die jeweilige Wechselwirkung der Kugeln *i* und *j* in jedem Zeitintervall $\Delta t$. Bei den im Rahmen dieser Anmeldung durchgeführten Simulationen wurde $\omega^D(\boldsymbol{r}_{ij}) = [\omega^R(r_{ij})]^2$ und $\sigma$ = 3 gewählt. Der konservative Kraftanteil $F_{ij}^C = \alpha_{ij}(1 - r_{ij}/r_c)\boldsymbol{e}_{ij}\ (r_{ij} < r_c)$ ist abstoßend und über den Abstoßungsparameter $\alpha_{ij}$ definiert.

Der Abstoßungsparameter zwischen den Polymeren A und B, $\alpha_{AB}$, lässt sich gemäß Gleichung (6) mit dem Flory-Huggins-Parameter $\chi_{AB}$ in Relation setzen.

$$\alpha_{AB} = \alpha_{AA} + 3{,}27\chi_{AB} \qquad (6)$$

$\alpha_{AA}$ und $\alpha_{BB}$ sind dabei die Abstoßungsparameter chemisch gleicher Moleküle, d.h. A mit A oder B mit B, wobei mit dem hier verwendeten Wert von $\alpha_{AA} = \alpha_{BB} = 25\ k_BTr_c^{-1}$ die Kompressibilität eines Fluids der Erfahrung nach bestmöglich wiedergegeben wird. Ein höherer Wert von $\alpha_{AB}$ bedeutet dabei eine höhere Unverträglichkeit der Polymerspezies A und B, d.h. eine größere Abstoßung.

Die bindenden Wechselwirkungen zwischen zwei direkt benachbarten Kugeln desselben Polymermoleküls wurden in den dieser Anmeldung zu Grunde liegenden Simulationen über eine harmonische Federkraft $\boldsymbol{F}_{ij}^S = -C\boldsymbol{r}_{ij}$ mit $C = 4{,}0\ k_BTr_c^{-2}$ als Federkonstante eines harmonischen Oszillators modelliert.

Die Simulation erfolgte bis zur zeitlichen Konstanz des mittleren quadratischen Trägheitsradius des Simulationssystems, wobei diese Konstanz als Kriterium für das Erreichen eines Gleichgewichtszustandes gewählt wurde. Nach Erreichen dieses Gleichgewichtszustandes wurden $2\times10^6$ weitere Simulationsschritte berechnet ($\Delta t = 0{,}06t_{dpd}$). Aus der derartig generierten Gleichgewichtskonfiguration wurde im Schritt 4 (wie unten beschrieben) die Grenzflächenspannung $\gamma$ ermittelt.

3. Zuordnung zu einem realen Polymersystem ("Mapping")

Als "Mapping" wird der Schritt des Simulationsverfahrens bezeichnet, bei dem die Kugeln des Typs a und b sowie der Abstoßungsparameter $\alpha_{AB}$ realen Polymerspezies bzw. oligomeren Einheiten realer Polymerspezies zugeordnet wurden.

Jede Kugel, aus der die Polymere für die Simulation zusammengesetzt werden, repräsentiert in der Simulation eine oligomere Einheit des jeweiligen Polymers, das heißt eine Struktureinheit, welche aus einer Anzahl *n* monomerer Baueinheiten aufgebaut ist. Wenn man dem abstrakten Polymersystem ein konkretes reales Polymer zuweist, lässt sich für jedes Polymer der konkrete Wert von *n* angeben, wobei dieser Wert für chemisch verschiedene Polymere mit unterschiedlicher Molmasse der Wiederholungseinheit variiert. Die Ermittlung von *n* erfolgt unter der Rahmenbedingung, dass die Kugeln vom Typ a und b, aus denen die Homo- und Pfropfcopolymere für die Simulation zusammengesetzt werden, in etwa gleiches Volumen und somit in etwa gleiche Masse aufweisen.

Im zweiten Schritt des "Mappings" kann für ein konkretes A-B-Polymersystem der Wert des Abstoßungsparameters $\alpha_{AB}$ aus dem Flory-Huggins-Parameter $\chi_{AB}$ gemäß Gleichung (6) bestimmt werden. Nachdem im ersten Schritt des "Mappings" jeder Kugel vom Typ a und b eine konkrete oligomere Einheit des jeweiligen Polymers A und B aufgebaut aus *n* monomeren Baueinheiten zugeordnet wurde, wurde der Wert *für* $\chi_{AB}$ unter Anwendung des COSMO-RS-Modells ermittelt. Dafür wurde für eine äquimolare Mischung der oligomeren Einheiten aufgebaut aus n monomeren Baueinheiten der Polymere A und B der Aktivitätskoeffizient $\gamma_A$ von A in der Mischung über das COSMO-RS-Modell quantenchemisch mit Hilfe der Software Biova COSMOtherm 2019 (Dassault Systemes) berechnet. Aus diesem Aktivitätskoeffizienten $\gamma_A$ wurde dann der Flory-Huggins-Parameter gemäß Gleichung (7) berechnet

$$\chi_{AB} = \frac{V_{tot}}{x_AV_A}\sqrt{\ln\gamma_A - \ln\left(1 - \frac{x_AV_A}{V_{tot}}\right) - \left(1 - \frac{1}{\frac{V_B}{V_A}}\right)\frac{x_AV_A}{V_{tot}}} \qquad (7).$$

In Gleichung (7) stellt $x_A$ den molaren Anteil von A in der Mischung dar (in unserem Fall also $x_A$ = 0,5), $V_A$ und $V_B$ sind die Volumina der Spezies A and B und $V_{tot} = V_A + V_B$.

COSMO-RS ("COnductor like Screening MOdel for Real Solvents") ist eine dem Fachmann bekannte quantenchemisch-basierte Gleichgewichtsthermodynamik-Simulationsmethode zur Vorhersage chemischer Potenziale in Fluiden. Details zum COSMO-RS-Modell und dessen Anwendung auf Fragestellungen wie in dieser Anmeldung sind dem Fachmann bekannt beispielsweise aus dem Übersichtsartikel von A. Klamt, "The COSMO and COSMO-RS solvation models", WIREs Comput Mol Sci 2018, 8:e1338. doi: 10.1002/wcms.1338 und den darin zitierten Arbeiten.

Auf diese Weise wurden zwei unterschiedliche Polymersysteme zugeordnet ("gemappt") und nachfolgend DPD-Simulationen unterzogen:

System 1: Polymer B (Pfropfrückgrat) = Polystyrol, Polymer A (Pfropfäste) = Bisphenol-A-basiertes Polycarbonat
System 2: Polymer B (Pfropfrückgrat) = Polypropylen, Polymer A (Pfropfäste) = Bisphenol-A-basiertes Polycarbonat

Für diese zwei Systeme ergab der "Mapping"-Prozess die Werte für $\alpha_{AB}$ und die Molmassen der Kugeln vom Typ a ($M_a$) und b ($M_b$) für eine Temperatur von 100 °C gemäß Tabelle 1, welche der Simulation zugrunde gelegt wurden.

**Tabelle 1**

| Pfropfrückgrat | Pfropfäste | $\alpha_{AB}$ | $M_b$ [g mol$^{-1}$] | $M_a$ [g mol$^{-1}$] |
|---|---|---|---|---|
| Polystyrol | Polycarbonat | 28 | 668 | 792 |
| Polypropylen | Polycarbonat | 35 | 717 | 792 |

Mit den Molmassen der Kugeln vom Typ A und B gemäß Tabelle 1 lassen sich die Werte für die Anzahl der Kugeln im Pfropfrückgrat $l_b$ und in den Pfropfästen $l_s$ über Multiplikation in Molmassen des Pfropfrückgrates $M_n$(B) und der Pfropfäste $M_n$(A) umrechnen.

4. Ermittlung der Grenzflächenspannung und der Effizienz der Pfropfcopolymere als Phasenverträglichkeitsvermittler aus der Gleichgewichtskonfiguration der DPD-Simulation

Die Grenzflächenspannung $\gamma$ wurde aus der im Verfahrensschritt 3 resultierenden Gleichgewichtskonfiguration gemäß Gleichung (8) ermittelt

$$\gamma = \left\langle \frac{L_z}{2} \left[ P_{zz} - \frac{1}{2} (P_{xx} + P_{yy}) \right] \right\rangle \qquad (8).$$

$P_{xx}$, $P_{yy}$ und $P_{zz}$ sind dabei die Diagonalkomponenten des Drucktensors, welche gemäß Gleichung (9)berechnet wurden

$$P_{kk} = \frac{1}{V} \left( \sum_{i=1}^{N} m_i v_{ik} v_{jk} + \sum_{i=1}^{N-1} \sum_{j=i+1}^{N} F_{ijk} r_{ijy} \right) \qquad (9),$$

wobei $N$ die Gesamtzahl der Kugeln und $V = L_x \times L_y \times L_z$ das Volumen der Simulationsbox darstellen.

Die in analoger Weise für das vergleichbare Blend der Homopolymere A und B in Abwesenheit von Pfropfcopolymer-Molekülen, das heißt für das unkompatibilisierte Blend, ermittelte Grenzflächenspannung $\gamma_0$ dient bei der Ermittlung der Phasenverträglichkeitsvermittler-Effizienz $E$ = (1 - $\gamma/\gamma_0$) des jeweiligen Pfropfcopolymers als Referenz.

Die erhaltene Phasenverträglichkeitsvermittler-Effizienz E ist in den Tabellen 2 und 3 für verschiedene Pfropfcopolymerstrukturen dargestellt. Dabei wurden die Anzahl der Seitenketten ($n_s$), das Molekulargewicht $M_n$(B) des Rückgrats und das Molekulargewicht $M_n$(A) einer einzelnen Seitenkette variiert. Daraus lassen sich jeweils auch Molekulargewichte für die Pfropfcopolymere (aus $M_n$(B) + $n_s$ multipliziert mit $M_n$(A)) , $M_n$(A) multipliziert mit $n_s$ sowie der Molmassenanteil in Gew.-% berechnen, den die Seitenketten am Pfropfcopolymer ausmachen (Massenanteil Pfropfäste). Die Simulationen wurden für Pfropfcopolymere durchgeführt, die entweder ein Rückgrat aus Polystyrol (PS, Tabelle 2) oder aus Polypropylen (PP, Tabelle 3) aufweisen. Die Seitenketten sind in beiden Fällen aus Bisphenol-A basiertem Polycarbonat aufgebaut.

Tabelle 4 zeigt den Einfluss der Pfropfarchitektur gemäß den oben verwendeten Bezeichnungen (i) bis (iv) bei für jedes Pfropfcopolymersystem gleichen Molekulargewichten $M_n$ des Rückgrats und der Seitenketten. Alle Pfropfcopolymere gemäß der Architekturen (i) bis (iv) wiesen hierbei 11 Seitenketten auf. Die Untersuchungen wurden sowohl mit Polystyrol als auch mit Polypropylen als Pfropfcopolymerrückgrat und in allen Fällen mit Bisphenol-A basiertem

Polycarbonat als Seitenketten durchgeführt.

**Tabelle 2:** Gleichmäßig äquidistant gepfropfte Pfropfcopolymere mit Polystyrol (PS) als Rückgrat und simulierte Werte für E

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **1** | PS | 6 | 42,1 | 6,3 | 38,0 | 80,1 | 0,47 | 67 |
| **2** | PS | 6 | 31,4 | 6,3 | 38,0 | 69,4 | 0,55 | 63 |
| **3** | PS | 6 | 26,1 | 6,3 | 38,0 | 64,1 | 0,59 | 56 |
| **4** | PS | 11 | 42,1 | 6,3 | 69,7 | 111,8 | 0,62 | 53 |
| **5** | PS | 11 | 20,7 | 5,5 | 61,0 | 81,7 | 0,75 | 51 |
| **6** | PS | 3 | 42,1 | 6,3 | 19,0 | 61,1 | 0,31 | 50 |
| **7** | PS | 7 | 20,7 | 5,5 | 38,8 | 59,5 | 0,65 | 49 |
| **8** | PS | 6 | 20,7 | 6,3 | 38,0 | 58,7 | 0,65 | 48 |
| **9** | PS | 11 | 42,1 | 3,2 | 34,8 | 76,9 | 0,45 | 47 |
| **10** | PS | 9 | 20,7 | 5,5 | 49,9 | 70,6 | 0,71 | 46 |
| **11** | PS | 11 | 31,4 | 6,3 | 69,7 | 101,1 | 0,69 | 45 |
| **12** | PS | 11 | 26,1 | 6,3 | 69,7 | 95,7 | 0,73 | 43 |
| **13** | PS | 11 | 31,4 | 3,2 | 34,8 | 66,2 | 0,53 | 42 |
| **14** | PS | 5 | 20,7 | 5,5 | 27,7 | 48,4 | 0,57 | 42 |
| **15** | PS | 11 | 20,7 | 3,2 | 34,8 | 55,6 | 0,63 | 41 |
| **16** | PS | 6 | 31,4 | 3,2 | 19,0 | 50,4 | 0,38 | 41 |
| **17** | PS | 4 | 20,7 | 6,3 | 25,3 | 46,1 | 0,55 | 41 |
| **18** | PS | 6 | 15,4 | 6,3 | 38,0 | 53,4 | 0,71 | 40 |
| **19** | PS | 11 | 26,1 | 3,2 | 34,8 | 60,9 | 0,57 | 39 |
| **20** | PS | 11 | 20,7 | 6,3 | 69,7 | 90,4 | 0,77 | 38 |
| **21** | PS | 6 | 42,1 | 3,2 | 19,0 | 61,1 | 0,31 | 38 |
| **22** | PS | 3 | 31,4 | 6,3 | 19,0 | 50,4 | 0,38 | 38 |
| **23** | PS | 4 | 20,7 | 7,1 | 28,5 | 49,2 | 0,58 | 38 |
| **24** | PS | 6 | 26,1 | 3,2 | 19,0 | 45,1 | 0,42 | 36 |
| **25** | PS | 4 | 20,7 | 7,9 | 31,7 | 52,4 | 0,60 | 36 |
| **26** | PS | 4 | 20,7 | 5,5 | 22,2 | 42,9 | 0,52 | 36 |
| **27** | PS | 11 | 20,7 | 2,4 | 26,1 | 46,8 | 0,56 | 34 |
| **28** | PS | 6 | 20,7 | 3,2 | 19,0 | 39,7 | 0,48 | 33 |

**Fortsetzung Tabelle 2**

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **29** | PS | 4 | 20,7 | 4,8 | 19,0 | 39,7 | 0,48 | 33 |

(fortgesetzt)

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **30** | PS | 3 | 26,1 | 6,3 | 19,0 | 45,1 | 0,42 | 33 |
| **31** | PS | 7 | 20,7 | 2,4 | 16,6 | 37,3 | 0,45 | 33 |
| **32** | PS | 11 | 42,1 | 1,6 | 17,4 | 59,5 | 0,29 | 32 |
| **33** | PS | 9 | 20,7 | 2,4 | 21,4 | 42,1 | 0,51 | 32 |
| **34** | PS | 11 | 31,4 | 1,6 | 17,4 | 48,8 | 0,36 | 32 |
| **35** | PS | 3 | 20,7 | 6,3 | 19,0 | 39,7 | 0,48 | 31 |
| **36** | PS | 6 | 15,4 | 3,2 | 19,0 | 34,4 | 0,55 | 30 |
| **37** | PS | 3 | 15,4 | 6,3 | 19,0 | 34,4 | 0,55 | 30 |
| **38** | PS | 11 | 15,4 | 6,3 | 69,7 | 85,1 | 0,82 | 30 |
| **39** | PS | 4 | 20,7 | 4,0 | 15,8 | 36,5 | 0,43 | 30 |
| **40** | PS | 11 | 20,7 | 1,6 | 17,4 | 38,1 | 0,46 | 30 |
| **V41** | PS | 6 | 10,0 | 6,3 | 38,0 | 48,0 | 0,79 | 27 |
| **V42** | PS | 3 | 42,1 | 3,2 | 9,5 | 51,6 | 0,18 | 27 |
| **V43** | PS | 1 | 42,1 | 6,3 | 6,3 | 48,4 | 0,13 | 27 |
| **V44** | PS | 3 | 26,1 | 3,2 | 9,5 | 35,6 | 0,27 | 27 |
| **V45** | PS | 3 | 31,4 | 3,2 | 9,5 | 40,9 | 0,23 | 26 |
| **V46** | PS | 3 | 15,4 | 3,2 | 9,5 | 24,9 | 0,38 | 26 |
| **V47** | PS | 6 | 10,0 | 1,6 | 9,5 | 19,5 | 0,49 | 24 |
| **V48** | PS | 4 | 20,7 | 3,2 | 12,7 | 33,4 | 0,38 | 24 |
| **V49** | PS | 6 | 42,1 | 1,6 | 9,5 | 51,6 | 0,18 | 23 |
| **V50** | PS | 6 | 10,0 | 3,2 | 19,0 | 29,0 | 0,65 | 23 |
| **V51** | PS | 11 | 10,0 | 1,6 | 17,4 | 27,4 | 0,63 | 23 |
| **V52** | PS | 11 | 20,7 | 0,8 | 8,7 | 29,4 | 0,30 | 22 |
| **V53** | PS | 6 | 7,3 | 3,2 | 19,0 | 26,4 | 0,72 | 22 |
| **V54** | PS | 4 | 7,3 | 4,8 | 19,0 | 26,4 | 0,72 | 22 |
| **V55** | PS | 1 | 31,4 | 6,3 | 6,3 | 37,7 | 0,17 | 22 |
| **V56** | PS | 4 | 7,3 | 7,9 | 31,7 | 39,0 | 0,81 | 22 |

**Fortsetzung Tabelle 2**

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V57** | PS | 6 | 20,7 | 1,6 | 9,5 | 30,2 | 0,31 | 22 |
| **V58** | PS | 3 | 20,7 | 3,2 | 9,5 | 30,2 | 0,31 | 22 |
| **V59** | PS | 4 | 20,7 | 2,4 | 9,5 | 30,2 | 0,31 | 22 |

(fortgesetzt)

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V60** | PS | 3 | 10,0 | 6,3 | 19,0 | 29,0 | 0,65 | 21 |
| **V61** | PS | 3 | 10,0 | 3,2 | 9,5 | 19,5 | 0,49 | 21 |
| **V62** | PS | 6 | 31,4 | 1,6 | 9,5 | 40,9 | 0,23 | 21 |
| **V63** | PS | 4 | 7,3 | 4,0 | 15,8 | 23,2 | 0,68 | 21 |
| **V64** | PS | 4 | 7,3 | 3,2 | 12,7 | 20,0 | 0,63 | 21 |
| **V65** | PS | 3 | 7,3 | 3,2 | 9,5 | 16,9 | 0,56 | 21 |
| **V66** | PS | 4 | 7,3 | 2,4 | 9,5 | 16,9 | 0,56 | 21 |
| **V67** | PS | 6 | 26,1 | 1,6 | 9,5 | 35,6 | 0,27 | 21 |
| **V68** | PS | 1 | 7,3 | 6,3 | 6,3 | 13,7 | 0,46 | 21 |
| **V69** | PS | 3 | 7,3 | 6,3 | 19,0 | 26,4 | 0,72 | 20 |
| **V70** | PS | 1 | 26,1 | 6,3 | 6,3 | 32,4 | 0,20 | 20 |
| **V71** | PS | 1 | 15,4 | 6,3 | 6,3 | 21,7 | 0,29 | 20 |
| **V72** | PS | 4 | 20,7 | 1,6 | 6,3 | 27,0 | 0,23 | 20 |
| **V73** | PS | 3 | 20,7 | 2,4 | 7,1 | 27,8 | 0,26 | 20 |
| **V74** | PS | 11 | 10,0 | 3,2 | 34,8 | 44,9 | 0,78 | 20 |
| **V75** | PS | 3 | 7,3 | 1,6 | 4,8 | 12,1 | 0,39 | 19 |
| **V76** | PS | 6 | 15,4 | 1,6 | 9,5 | 24,9 | 0,38 | 19 |
| **V77** | PS | 6 | 7,3 | 6,3 | 38,0 | 45,4 | 0,84 | 18 |
| **V78** | PS | 4 | 7,3 | 7,1 | 28,5 | 35,9 | 0,80 | 18 |
| **V79** | PS | 7 | 20,7 | 0,8 | 5,5 | 26,3 | 0,21 | 18 |
| **V80** | PS | 1 | 10,0 | 6,3 | 6,3 | 16,4 | 0,39 | 17 |
| **V81** | PS | 4 | 7,3 | 5,5 | 22,2 | 29,5 | 0,75 | 17 |
| **V82** | PS | 1 | 31,4 | 3,2 | 3,2 | 34,6 | 0,09 | 17 |
| **V83** | PS | 5 | 20,7 | 0,8 | 4,0 | 24,7 | 0,16 | 16 |
| **V84** | PS | 3 | 42,1 | 1,6 | 4,8 | 46,8 | 0,10 | 16 |
| **V85** | PS | 4 | 7,3 | 1,6 | 6,3 | 13,7 | 0,46 | 16 |

**Fortsetzung Tabelle 2**

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V86** | PS | 3 | 26,1 | 1,6 | 4,8 | 30,8 | 0,15 | 16 |
| **V87** | PS | 3 | 31,4 | 1,6 | 4,8 | 36,1 | 0,13 | 16 |
| **V88** | PS | 1 | 20,7 | 6,3 | 6,3 | 27,0 | 0,23 | 16 |
| **V89** | PS | 3 | 10,0 | 1,6 | 4,8 | 14,8 | 0,32 | 16 |

(fortgesetzt)

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V90** | PS | 9 | 20,7 | 0,8 | 7,1 | 27,8 | 0,26 | 15 |
| **V91** | PS | 1 | 10,0 | 3,2 | 3,2 | 13,2 | 0,24 | 15 |
| **V92** | PS | 1 | 20,7 | 3,2 | 3,2 | 23,9 | 0,13 | 15 |
| **V93** | PS | 4 | 20,7 | 0,8 | 3,2 | 23,9 | 0,13 | 15 |
| **V94** | PS | 1 | 7,3 | 3,2 | 3,2 | 10,5 | 0,30 | 15 |
| **V95** | PS | 4 | 7,3 | 0,8 | 3,2 | 10,5 | 0,30 | 15 |
| **V96** | PS | 1 | 42,1 | 3,2 | 3,2 | 45,3 | 0,07 | 14 |
| **V97** | PS | 11 | 7,3 | 3,2 | 34,8 | 42,2 | 0,83 | 14 |
| **V98** | PS | 3 | 15,4 | 1,6 | 4,8 | 20,1 | 0,24 | 14 |
| **V99** | PS | 3 | 20,7 | 1,6 | 4,8 | 25,5 | 0,19 | 13 |
| **V100** | PS | 4 | 7,3 | 6,3 | 25,3 | 32,7 | 0,78 | 13 |
| **V101** | PS | 6 | 7,3 | 1,6 | 9,5 | 16,9 | 0,56 | 13 |
| **V102** | PS | 11 | 10,0 | 6,3 | 69,7 | 79,7 | 0,87 | 13 |
| **V103** | PS | 11 | 7,3 | 1,6 | 17,4 | 24,8 | 0,70 | 12 |
| **V104** | PS | 1 | 26,1 | 3,2 | 3,2 | 29,2 | 0,11 | 12 |
| **V105** | PS | 1 | 15,4 | 3,2 | 3,2 | 18,5 | 0,17 | 12 |
| V106 | PS | 11 | 7,3 | 6,3 | 69,7 | 77,0 | 0,90 | 12 |
| V107 | PS | 1 | 20,7 | 2,4 | 2,4 | 23,1 | 0,10 | 11 |
| **V108** | PS | 1 | 20,7 | 1,6 | 1,6 | 22,3 | 0,07 | 10 |
| **V109** | PS | 1 | 20,7 | 5,5 | 5,5 | 26,3 | 0,21 | 10 |
| **V110** | PS | 1 | 26,1 | 1,6 | 1,6 | 27,6 | 0,06 | 10 |
| **V111** | PS | 1 | 31,4 | 1,6 | 1,6 | 33,0 | 0,05 | 9 |
| **V112** | PS | 3 | 20,7 | 0,8 | 2,4 | 23,1 | 0,10 | 9 |
| **V113** | PS | 1 | 10,0 | 1,6 | 1,6 | 11,6 | 0,14 | 9 |
| **V114** | PS | 1 | 15,4 | 1,6 | 1,6 | 16,9 | 0,09 | 9 |

**Fortsetzung** Tabelle 2

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V115** | PS | 1 | 42,1 | 1,6 | 1,6 | 43,7 | 0,04 | 8 |
| **V116** | PS | 1 | 7,3 | 1,6 | 1,6 | 8,9 | 0,18 | 5 |
| **V117** | PS | 1 | 20,7 | 0,8 | 0,8 | 21,5 | 0,04 | 5 |

**Tabelle 3:** Gleichmäßig äquidistant gepfropfte Pfropfcopolymere mit Polypropylen (PP) als Rückgrat und simulierte Werte für E

| Nr. | Rückgrat | $n_s$ | $M_n(B)$ (Rückgrat) [kg/mol] | $M_n(A)$ (Pfropfast) [kg/mol] | $M_n(A)$ x $n_s$ (Pfropfäste gesamt) [kg/mol] | $M_n$ Pfropfcopolymer [kg/mol] | Massenanteil Pfropfäste | E |
|---|---|---|---|---|---|---|---|---|
| **118** | PP | 6 | 45,2 | 6,3 | 38,0 | 83,2 | 0,46 | 82 |
| **119** | PP | 11 | 45,2 | 6,3 | 69,7 | 114,9 | 0,61 | 78 |
| **120** | PP | 11 | 22,2 | 5,5 | 61,0 | 83,2 | 0,73 | 77 |
| **121** | PP | 11 | 45,2 | 3,2 | 34,8 | 80,0 | 0,44 | 75 |
| **122** | PP | 9 | 22,2 | 5,5 | 49,9 | 72,1 | 0,69 | 74 |
| **123** | PP | 4 | 22,2 | 7,1 | 28,5 | 50,7 | 0,56 | 73 |
| **124** | PP | 11 | 22,2 | 3,2 | 34,8 | 57,1 | 0,61 | 66 |
| **125** | PP | 4 | 22,2 | 7,9 | 31,7 | 53,9 | 0,59 | 65 |
| **126** | PP | 7 | 22,2 | 5,5 | 38,8 | 61,0 | 0,64 | 63 |
| **127** | PP | 6 | 45,2 | 3,2 | 19,0 | 64,2 | 0,30 | 62 |
| **128** | PP | 4 | 22,2 | 6,3 | 25,3 | 47,6 | 0,53 | 62 |
| **129** | PP | 11 | 22,2 | 6,3 | 69,7 | 91,9 | 0,76 | 58 |
| **130** | PP | 5 | 22,2 | 5,5 | 27,7 | 49,9 | 0,55 | 54 |
| **131** | PP | 11 | 22,2 | 1,6 | 17,4 | 39,7 | 0,44 | 53 |
| **132** | PP | 11 | 45,2 | 1,6 | 17,4 | 62,6 | 0,28 | 53 |
| **133** | PP | 4 | 22,2 | 5,5 | 22,2 | 44,4 | 0,50 | 51 |
| **134** | PP | 6 | 22,2 | 6,3 | 38,0 | 60,2 | 0,63 | 51 |
| **135** | PP | 3 | 22,2 | 5,5 | 16,6 | 38,9 | 0,43 | 46 |
| **136** | PP | 6 | 22,2 | 3,2 | 19,0 | 41,2 | 0,46 | 37 |
| **137** | PP | 4 | 22,2 | 4,8 | 19,0 | 41,2 | 0,46 | 37 |

**Fortsetzung Tabelle 3**

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **138** | PP | 3 | 45,2 | 6,3 | 19,0 | 64,2 | 0,30 | 31 |
| **139** | PP | 4 | 22,2 | 4,0 | 15,8 | 38,1 | 0,42 | 30 |
| **V140** | PP | 3 | 45,2 | 3,2 | 9,5 | 54,7 | 0,17 | 29 |
| **V141** | PP | 6 | 7,9 | 6,3 | 38,0 | 45,9 | 0,83 | 29 |
| **V142** | PP | 4 | 7,9 | 7,9 | 31,7 | 39,6 | 0,80 | 29 |
| **V143** | PP | 6 | 22,2 | 1,6 | 9,5 | 31,7 | 0,30 | 27 |
| **V144** | PP | 4 | 7,9 | 7,1 | 28,5 | 36,4 | 0,78 | 27 |
| **V145** | PP | 11 | 7,9 | 3,2 | 34,8 | 42,7 | 0,82 | 27 |
| **V146** | PP | 4 | 7,9 | 6,3 | 25,3 | 33,2 | 0,76 | 26 |

(fortgesetzt)

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V147** | PP | 4 | 7,9 | 5,5 | 22,2 | 30,1 | 0,74 | 24 |
| **V148** | PP | 3 | 45,2 | 1,6 | 4,8 | 49,9 | 0,10 | 22 |
| **V149** | PP | 4 | 22,2 | 3,2 | 12,7 | 34,9 | 0,36 | 21 |
| **V150** | PP | 11 | 7,9 | 1,6 | 17,4 | 25,3 | 0,69 | 20 |
| **V151** | PP | 11 | 7,9 | 6,3 | 69,7 | 77,6 | 0,90 | 20 |
| **V152** | PP | 6 | 7,9 | 3,2 | 19,0 | 26,9 | 0,71 | 18 |
| **V153** | PP | 4 | 7,9 | 4,8 | 19,0 | 26,9 | 0,71 | 18 |
| **V154** | PP | 4 | 7,9 | 4,0 | 15,8 | 23,7 | 0,67 | 16 |
| **V155** | PP | 6 | 7,9 | 1,6 | 9,5 | 17,4 | 0,55 | 13 |
| **V156** | PP | 3 | 7,9 | 6,3 | 19,0 | 26,9 | 0,71 | 13 |
| **V157** | PP | 4 | 7,9 | 3,2 | 12,7 | 20,6 | 0,62 | 13 |
| **V158** | PP | 3 | 22,2 | 1,6 | 4,8 | 27,0 | 0,18 | 16 |
| **V159** | PP | 1 | 45,2 | 6,3 | 6,3 | 51,5 | 0,12 | 12 |
| **V160** | PP | 3 | 7,9 | 3,2 | 9,5 | 17,4 | 0,55 | 12 |
| **V161** | PP | 3 | 7,9 | 1,6 | 4,8 | 12,6 | 0,38 | 11 |
| **V162** | PP | 4 | 7,9 | 1,6 | 6,3 | 14,2 | 0,45 | 11 |
| **V163** | PP | 1 | 45,2 | 1,6 | 1,6 | 46,8 | 0,03 | 11 |
| **V164** | PP | 1 | 45,2 | 3,2 | 3,2 | 48,3 | 0,07 | 10 |
| **V165** | PP | 3 | 22,2 | 3,2 | 9,5 | 31,7 | 0,30 | 16 |
| **V166** | PP | 4 | 22,2 | 1,6 | 6,3 | 28,6 | 0,22 | 13 |

**Fortsetzung Tabelle 3**

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V167** | PP | 1 | 7,9 | 6,3 | 6,3 | 14,2 | 0,45 | 9 |
| **V168** | PP | 1 | 22,2 | 6,3 | 6,3 | 28,6 | 0,22 | 12 |
| **V169** | PP | 7 | 22,2 | 0,8 | 5,5 | 27,8 | 0,20 | 10 |
| **V170** | PP | 1 | 22,2 | 3,2 | 3,2 | 25,4 | 0,12 | 10 |
| **V171** | PP | 4 | 7,9 | 0,8 | 3,2 | 11,1 | 0,29 | 8 |
| **V172** | PP | 1 | 7,9 | 3,2 | 3,2 | 11,1 | 0,29 | 8 |
| **V173** | PP | 1 | 7,9 | 1,6 | 1,6 | 9,5 | 0,17 | 7 |
| **V174** | PP | 4 | 22,2 | 0,8 | 3,2 | 25,4 | 0,12 | 10 |
| **V175** | PP | 11 | 22,2 | 0,8 | 8,7 | 30,9 | 0,28 | 10 |
| **V176** | PP | 9 | 22,2 | 0,8 | 7,1 | 29,4 | 0,24 | 9 |

(fortgesetzt)

| Nr. | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|
| **V177** | PP | 3 | 22,2 | 0,8 | 2,4 | 24,6 | 0,10 | 9 |
| **V178** | PP | 5 | 22,2 | 0,8 | 4,0 | 26,2 | 0,15 | 9 |
| **V179** | PP | 1 | 22,2 | 1,6 | 1,6 | 23,8 | 0,07 | 8 |
| **V180** | PP | 1 | 22,2 | 5,5 | 5,5 | 27,8 | 0,20 | 5 |
| **V181** | PP | 1 | 22,2 | 0,8 | 0,8 | 23,0 | 0,03 | 5 |

**Tabelle 4: Einfluss der Pfropfarchitektur auf E**

| Nr. | Pfropfarchitektur | Rückgrat | $n_s$ | $M_n$(B) (Rückgrat) [kg/mol] | $M_n$(A) (Pfropfast) [kg/mol] | $M_n(A) \times n_s$ (Pfropfäste gesamt) [kg/mol] | $M_n$ Pfropfcopolymer [kg/mol] | Massenanteil Pfropfäste | E |
|---|---|---|---|---|---|---|---|---|---|
| **11** | gleichmäßig äquidistant | PS | 11 | 31,4 | 6,3 | 69,7 | 101,1 | 0,69 | 45 |
| **182** | einfach endständig | PS | 11 | 31,4 | 6,3 | 69,7 | 101,1 | 0,69 | 46 |
| **183** | mittelständig | PS | 11 | 31,4 | 6,3 | 69,7 | 101,1 | 0,69 | 78 |
| **184** | doppelt endständig | PS | 11 | 31,4 | 6,3 | 69,7 | 101,1 | 0,69 | 66 |
| **185** | gleichmäßig äquidistant | PP | 11 | 33,7 | 6,3 | 69,7 | 103,4 | 0,67 | 72 |
| **186** | einfach endständig | PP | 11 | 33,7 | 6,3 | 69,7 | 103,4 | 0,67 | 52 |
| **187** | mittelständig | PP | 11 | 33,7 | 6,3 | 69,7 | 103,4 | 0,67 | 88 |
| **188** | doppelt endständig | PP | 11 | 33,7 | 6,3 | 69,7 | 103,4 | 0,67 | 81 |

Die Daten in den Tabellen 2 und 3 zeigen, dass nur die erfindungsgemäßen Ausführungsformen der Pfropfcopolymere eine erhöhte Phasenverträglichkeitsvermittler-Effizienz im Sinne eines Wertes von E = $(1 - \gamma/\gamma_0)$ von mindestens 30 aufweisen.

Die Daten in Tabelle 4 zeigen, dass solche Pfropfcopolymere mit doppelt endständig gepfropfter und insbesondere mit mittelständig gepfropfter Architektur gegenüber solchen hinsichtlich ihrer chemischen Zusammensetzung, Anzahl der Pfropfäste sowie Molmassen von Pfropfrückgrat und Pfropfästen vergleichbaren Pfropfcopolymeren mit gleichmäßig äquidistant gepfropfter und insbesondere einfach endständig gepfropfter Architektur verbesserte Phasenverträglichkeitsvermittler-Effizienz im Sinne eines höheren Wertes von E = $(1 - \gamma/\gamma_0)$ aufweisen.

Auswertungen der Daten in Tabellen 2 und 3 zeigen weiterhin, dass oberhalb eines Wertes des Produktes $M_n(A) \times n_s$ von etwa 50 kg/mol eine weitere Erhöhung des Wertes dieser Größe keine wesentlichen weiteren Verbesserungen der Phasenverträglichkeitsvermittler-Effizienz im Sinne eines höheren Wertes von E = $(1 - \gamma/\gamma_0)$ mehr bewirken. Das ist beispielsweise aus einer Auftragung von E gegen $M_n(A) \times n_s$ für alle Werte aus Tabelle 2 mit einem konstantem $M_n(B)$ von beispielsweise 20,7 kg/mol oder für alle Werte aus Tabelle 3 mit einem konstantem $M_n(B)$ von beispielsweise 22,2 kg/mol ersichtlich, aber auch bei entsprechenden Auftragungen für andere konstante $M_n(B)$-Werte im erfindungsgemäßen Bereich.

Weiterhin zeigen Auswertungen der Daten in Tabellen 2 und 3, dass oberhalb eines Wertes für $M_n(A)$ von etwa 8 kg/mol eine weitere Erhöhung des Wertes dieser Größe keine wesentlichen weiteren Verbesserungen der Phasenverträglichkeitsvermittler-Effizienz im Sinne eines höheren Wertes von E = $(1 - \gamma/\gamma_0)$ mehr bewirken. Das ist beispielsweise aus einer Auftragung von E gegen $M_n(A)$ für alle Werte aus Tabelle 2 mit einem konstantem $M_n(B)$ von beispielsweise 20,7 kg/mol und einem konstanten $n_s$ von beispielsweise 4 ersichtlich.

Weiterhin zeigen Auswertungen der Daten in Tabellen 2 und 3, dass oberhalb eines Wertes für $n_s$ von etwa 8 eine weitere Erhöhung des Wertes dieser Größe keine wesentlichen weiteren Verbesserungen der Phasenverträglichkeitsvermittler-Effizienz im Sinne eines höheren Wertes von E = $(1 - \gamma/\gamma_0)$ mehr bewirken. Das ist beispielsweise aus einer Auftragung von E gegen $n_s$ für alle Werte aus Tabelle 2 mit einem konstantem $M_n(B)$ von beispielsweise 20,7 kg/mol und einem konstanten $M_n(A)$ von beispielsweise 5,5 kg/mol ersichtlich. Gleiches gilt für eine Auftragung von E gegen $n_s$ für alle Werte aus Tabelle 3 mit einem konstantem $M_n(B)$ von beispielsweise 22,2 kg/mol und einem konstanten $M_n(A)$ von beispielsweise 5,5 kg/mol.

Schließlich zeigen Auswertungen der Daten in Tabellen 2 und 3, dass oberhalb eines Wertes für $M_n(B)$ von etwa 50 kJ/mol eine weitere Erhöhung des Wertes dieser Größe keine wesentlichen weiteren Verbesserungen der Phasenverträglichkeitsvermittler-Effizienz im Sinne eines höheren Wertes von E = $(1 - \gamma/\gamma_0)$ mehr bewirken. Das ist beispielsweise aus einer Auftragung von E gegen $M_n(B)$ für alle Werte aus Tabelle 2 mit einem konstantem $M_n(A)$ von beispielsweise 6,3 kg/mol und einem konstanten $n_s$ von beispielsweise 11 ersichtlich.

Oberhalb der genannten Werte für $M_n(B)$, $M_n(A)$, $n_s$ und $M_n(A) \times n_s$ verbessert sich - sofern überhaupt - die Phasenverträglichkeitsvermittler-Effizienz des Pfropfcopolymers im Gleichgewichtszustand nur noch geringfügig, andererseits stehen weitere Erhöhungen dieser das Pfropfcopolymer charakterisierenden Größen aber dem angestrebten Ziel entgegen, durch Minimierung des Molekulargewichtes des Pfropfcopolymers dessen Beweglichkeit in der Polymerschmelzemischung zu maximieren und damit die Gleichgewichtseinstellung zu beschleunigen.

Für einige ausgewählte Simulationsexperimente aus Tabelle 2 wurde die Anzahl der Simulationsschritte, die bis zur Erreichung des Gleichgewichtszustandes notwendig war, ausgewertet. Die Ergebnisse dieser Analyse sind in Tabelle 5 dargestellt.

**Tabelle 5:** Ausgewählte Experimente und Anzahl der Simulationsschritte

| Nr. | Rückgrat | $n_s$ | $M_n(B)$ (Rückgrat) [kg/mol] | $M_n(A)$ (Pfropfast) [kg/mol] | $M_n(A) \times n_s$ (Pfropfäste gesamt) [kg/mol] | $M_n$ Pfropfcopolymer [kg/mol] | E | Anzahl Simulationsschritte bis Gleichgewicht |
|---|---|---|---|---|---|---|---|---|
| 4 | Polystyrol | 11 | 42,1 | 6,3 | 69,7 | 111,8 | 53 | 1,6E+06 |
| 9 | Polystyrol | 11 | 42,1 | 3,2 | 34,8 | 76,9 | 47 | 1,3E+06 |
| 6 | Polystyrol | 3 | 42,1 | 6,3 | 19,0 | 61,1 | 50 | 1,1E+06 |

Die Daten in Tabelle 5 bestätigen, dass bei höheren Werten von $M_n$(A), $M_n$(B) und $n_{s,}$ und somit bei höherer Molmasse $M_n$ des Pfropfcopolymers und bei höherem Wert des Produktes $M_n(A) \times n_{s,}$ mehr Simulationsschritte notwendig sind um einen stationären Gleichgewichtszustand zu realisieren. Übertragen auf eine reale Polymermischung bedeutet dies, dass eine längere Zeit benötigt wird, bis sich eine stabile Verteilung des Pfropfcopolymers in der Mischung und somit eine stabile Morphologie aus den Komponenten, also den Polymeren A und B sowie dem Pfropfcopolymerisat, eingestellt hat. Dafür muss also eine Erhöhung der Verweilzeit im Mischaggregat wie z.B. einem Extruder eingestellt werden, was sich in vielen Fällen apparativ nur schwer realisieren lässt oder andere Nachteile wie eine thermische Schädigung der polymeren Bestandteile mit sich bringt. Einen großen Einfluss auf die zur Erreichung eines stationären Gleichgewichtszustands erforderliche Anzahl an Simulationsschritte haben dabei die Anzahl $n_s$ der Pfropfäste (Experimente 4 und 6), gefolgt von dem Wert von $M_n$(A), das heißt dem Molekulargewicht der Pfropfäste (Experimente 4 und 9) und somit in Konsequenz insbesondere der Wert des Produktes $M_n(A) \times n_s$ (alle Daten in Tabelle 5).

Aus den Daten in Tabelle 5 kann somit die Erkenntnis abgeleitet werden, dass es im Hinblick auf die Minimierung der Anzahl der zur Erreichung des Gleichgewichts notwendigen Simulationsschritte bzw. in die technische Ebene übersetzt im Hinblick auf die Minimierung der Verweilzeiten, die zur Erreichung eines solchen anzustrebenden Gleichgewichtszustand notwendig sind, sinnvoll ist, die Werte von $n_s$ und $M_n$(A), sowie insbesondere des Wertes für das Produkt $M_n(A) \times n_s$ nicht höher zu wählen als für die Realisierung der angestrebten Phasenverträglichkeitsvermittler-Effizienz E unbedingt erforderlich. Aus dieser Überlegung ergeben sich für die Werte dieser drei Merkmale Obergrenzen, oberhalb derer die Verbesserung der Phasenverträglichkeitsvermittler-Effizienz E nur noch wenig bzw. nicht mehr signifikant verbessert wird, die erforderlichen Verweilzeiten zur Erzielung des zur Realisierung dieser Phasenverträglichkeitsvermittler-Effizienz E einzustellenden Gleichgewichtszustands aber stark ansteigen.

Entsprechende Untersuchungen zu der Anzahl der Simulationsschritte bis zum Gleichgewicht wurden auch für die bevorzugten Pfropfcopolymere mit spezieller Pfropfarchitektur ("doppelt endständig gepfropft" und "mittelständig gepfropft") durchgeführt. Dabei zeigte sich kein Einfluss der Architektur verglichen mit den "gleichmäßig äquidistant gepfropften" Pfropfcopolymeren mit identischen Werten für $n_{s,}$ $M_n$(A) und $M_n$(B), d.h. die Anzahl der Simulationsschritte bis zum Gleichgewicht war im Rahmen der Bestimmungsgenauigkeit dieser Größe für alle drei unterschiedlichen Pfropfcopolymer-Architekturen gleich.

**Patentansprüche**

1. Pfropfcopolymer der allgemeinen Struktur B-$(A)_{ns}$ bestehend aus Blöcken zweier in ihrer chemischen Zusammensetzung unterschiedlicher Polymere A und B, wobei eines der Polymere ein Polykondensationspolymer ist ausgewählt aus der Gruppe bestehend aus Polycarbonaten, Polyestercarbonaten, Polyestern und Polyamiden und das andere Polymer ein Polymerisat aus mindestens einem Vinylmonomeren ist,
**dadurch gekennzeichnet, dass**

   (i) das zahlengemittelte Molekulargewicht des Blocks aus dem Polymer B $M_n$(B) mindestens 13 kg/mol, bestimmt durch eine Kombination aus Gelpermeationschromatographie und NMR-Spektroskopie, beträgt,
   (ii) die Anzahl der Seitenketten im Pfropfcopolymer $n_{s,}$ bestimmt durch NMR-Spektroskopie, mindestens 3 beträgt,
   (iii) das zahlengemittelte Molekulargewicht der Blöcke aus dem Polymer A $M_n$(A) mindestens 1,5 kg/mol, bestimmt durch eine Kombination von Gelpermeationschromatographie und NMR-Spektroskopie, beträgt und
   (iv) $n_s$ multipliziert mit $M_n$(A) mindestens 13 kg/mol ergibt.

2. Pfropfcopolymer gemäß Anspruch 1, wobei Polymer A ausgewählt ist aus der Gruppe bestehend aus aromatischen Polycarbonaten, aromatischen Polyestercarbonaten und aromatischen Polyestern.

3. Pfropfcopolymer gemäß Anspruch 1 oder 2, wobei Polymer A ein aromatisches Polycarbonat ist.

4. Pfropfcopolymer gemäß einem der vorhergehenden Ansprüche, wobei Polymer B ein Polymerisat aus einem oder mehreren unterschiedlichen Vinylmonomeren, ausgewählt aus der Gruppe bestehend aus Styrol, Styrolderivaten, Acrylnitril, Acrylsäureestern, Acrylsäureesterderivaten, Olefinen, Maleinsäureimid und Maleinsäureimidderivate ist.

5. Pfropfcopolymer gemäß Anspruch 4, wobei die Vinylmonomere ausgewählt sind aus der Gruppe bestehend aus Styrol, Acrylnitril, Methylmethacrylat, Glycidylmethacrylat und Olefinen.

6. Pfropfcopolymer gemäß einem der vorhergehenden Ansprüche, **dadurch gekennzeichnet, dass** die folgenden Merkmale vorliegen:

(i) $M_n(B)$ ist mindestens 23 kg/mol,
(ii) $n_s$ ist mindestens 6,
(iii) $M_n(A)$ ist mindestens 4,5 kg/mol,
(iv) $n_s$ multipliziert mit $M_n(A)$ ergibt mindestens 13 kg/mol und
(v) $M_n(A) \cdot n_s / [M_n(B) + M_n(A) \cdot n_s]$ liegt im Bereich von 0,40 bis 0,70.

**7.** Pfropfcopolymer gemäß einem der vorhergehenden Ansprüche, wobei $n_s$ bei maximal 15 liegt.

**8.** Pfropfcopolymer gemäß einem der vorhergehenden Ansprüche, wobei $M_n(B)$ bei maximal 200 kg/mol liegt.

**9.** Pfropfcopolymer gemäß einem der vorhergehenden Ansprüche, wobei $M_n(A)$ bei maximal 15 kg/mol liegt.

**10.** Pfropfcopolymer gemäß einem der vorhergehenden Ansprüche, wobei $n_s$ multipliziert mit $M_n(A)$ bei maximal 80 kg/mol liegt.

**11.** Pfropfcopolymer gemäß einem der vorhergehenden Ansprüche, wobei die Architektur des Pfropfcopolymers ausgewählt ist aus doppelt endständig gepfropft und mittelständig gepfropft.

**12.** Verwendung eines Pfropfcopolymers gemäß einem der vorhergehenden Ansprüche zur Herabsetzung der Phasengrenzflächenspannung in Mischungen enthaltend die Polymere A und B.

**13.** Polymerzusammensetzung enthaltend die Polymere A und B sowie als Komponente C ein Pfropfcopolymer gemäß einem der vorhergehenden Ansprüche 1 bis 11, wobei die Polymere A und B die gleiche chemische Struktur aufweisen wie die Blöcke der Polymere A und B im Pfropfcopolymer gemäß Komponente C.

**14.** Polymerzusammensetzung gemäß Anspruch 13, wobei das Verhältnis des Massenanteils von Polymer A in der Polymerzusammensetzung, bezogen auf die Summe aus den Polymeren A und B in der Zusammensetzung, zum Massenanteil der Pfropfäste im Pfropfcopolymer gemäß Komponente C bei 0,6 bis 1,4 liegt.

**15.** Formkörper enthaltend eine Zusammensetzung gemäß einem der Ansprüche 13 oder 14.

Abbildung 1

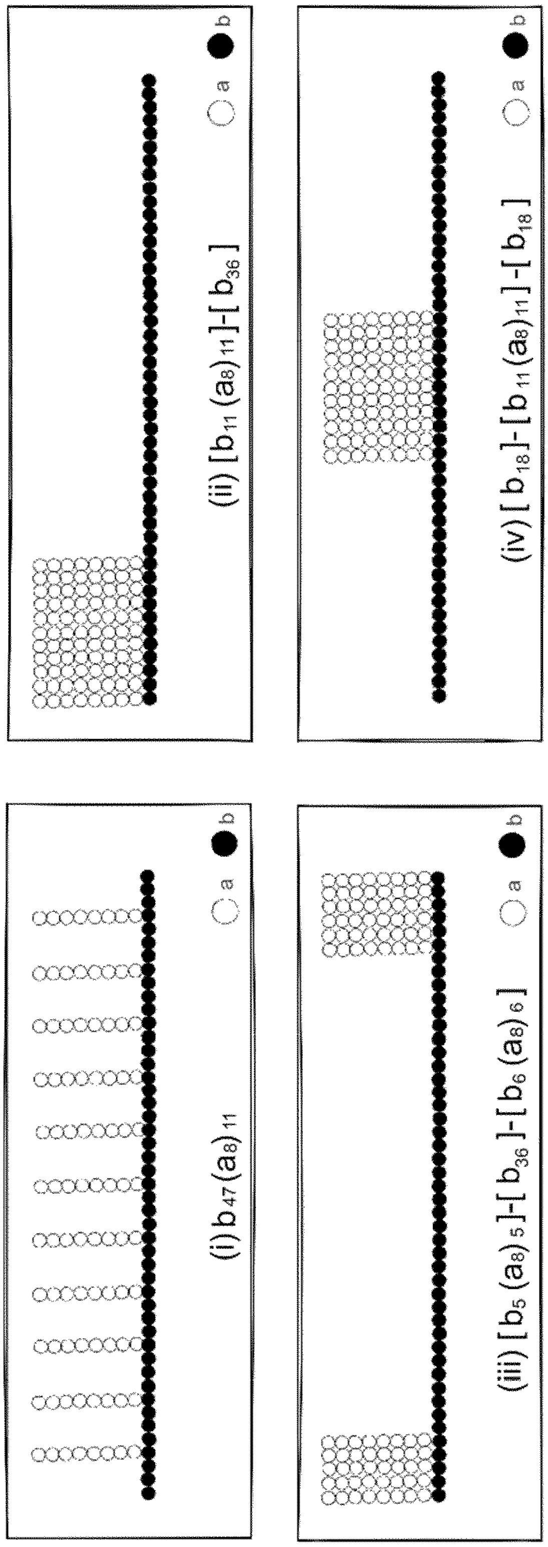
(i) $b_{47}(a_8)_{11}$
(ii) $[b_{11}(a_8)_{11}]$-$[b_{36}]$
(iii) $[b_5(a_8)_5]$-$[b_{36}]$-$[b_6(a_8)_6]$
(iv) $[b_{18}]$-$[b_{11}(a_8)_{11}]$-$[b_{18}]$
a
b

**Abbildung 2**

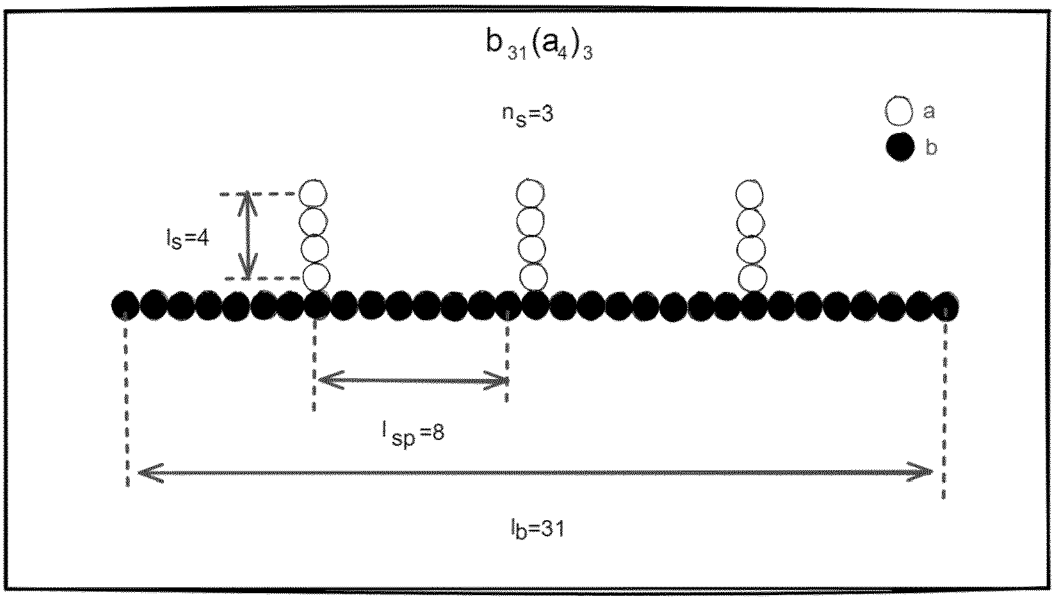

Europäisches Patentamt
European Patent Office
Office européen des brevets

# EUROPÄISCHER RECHERCHENBERICHT

Nummer der Anmeldung
EP 22 16 6509

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H09 143293 A (TOYO BOSEKI) 3. Juni 1997 (1997-06-03) * Absätze [0007] - [0010], [0051]; Beispiel 1 * | 1-15 | INV. C08F283/02 C08F290/06 C08L51/08 |
| X<br>A | CN 108 586 668 B (UNIV TIANJIN) 21. Juli 2020 (2020-07-21) * Ansprüche 1-7; Beispiele 1-3 * | 1-11, 13-15<br>12 | |
| X | US 8 426 532 B2 (HUANG RUBIN [NL]; VAN ZYL ANDRE [NL] ET AL.) 23. April 2013 (2013-04-23) * Spalte 12, Zeile 50 - Zeile 52; Beispiele 1-13 * | 1-15 | |
| X<br>A | US 4 888 401 A (KAWAKI TAKAO [JP] ET AL) 19. Dezember 1989 (1989-12-19) * Ansprüche 1-9; Beispiele 1-15 * | 1-11, 13-15<br>12 | |
| | | | RECHERCHIERTE SACHGEBIETE (IPC) |
| | | | C08F C08L |

Der vorliegende Recherchenbericht wurde für alle Patentansprüche erstellt

1

| Recherchenort | Abschlußdatum der Recherche | Prüfer |
|---|---|---|
| München | 29. September 2022 | Madalinski, Maciej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 16 6509

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2022

| Im Recherchenbericht angeführtes Patentdokument | Datum der Veröffentlichung | Mitglied(er) der Patentfamilie | Datum der Veröffentlichung |
|---|---|---|---|
| JP H09143293 A | 03-06-1997 | JP 3572762 B2 | 06-10-2004 |
| | | JP H09143293 A | 03-06-1997 |
| CN 108586668 B | 21-07-2020 | KEINE | |
| US 8426532 B2 | 23-04-2013 | CN 103108895 A | 15-05-2013 |
| | | EP 2591028 A2 | 15-05-2013 |
| | | EP 2664634 A1 | 20-11-2013 |
| | | JP 2013537258 A | 30-09-2013 |
| | | KR 20130109136 A | 07-10-2013 |
| | | US 2012071606 A1 | 22-03-2012 |
| | | WO 2012037461 A2 | 22-03-2012 |
| US 4888401 A | 19-12-1989 | CA 1304851 C | 07-07-1992 |
| | | DE 3888866 T2 | 18-08-1994 |
| | | EP 0293908 A2 | 07-12-1988 |
| | | US 4888401 A | 19-12-1989 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4959411 A
- US 2006063891 A1
- DE 1495626 B
- DE 2232877 A
- DE 2703376 A
- DE 2714544 A
- DE 3000610 A
- DE 3832396 A
- DE 3007934 A
- DE 2842005 A
- DE 2940024 A